# EUROPÄISCHE PATENTSCHRIFT

(11) **EP 2 909 068 B1**
(45) Veröffentlichungstag und Bekanntmachung des Hinweises auf die Patenterteilung: **12.06.2019**
(21) Anmeldenummer: 13814509.9
(22) Anmeldetag: 18.12.2013
(51) Int. Cl.: B60T 17/22

(54) **STROMVERSORGUNGSEINRICHTUNG FÜR EIN SCHIENENFAHRZEUG**
POWER SUPPLY ARRANGEMENT FOR A RAIL VEHICLE
SYSTÈME D'ALIMENTATION ÉLECTRIQUE D'UN VÉHICULE FERROVIAIRE

(30) Priorität: 20.12.2012 DE 102012223901
(43) Veröffentlichungstag der Anmeldung: 26.08.2015
(73) Patentinhaber: Siemens Mobility GmbH, 81739 München (DE)
(72) Erfinder: SCHWARZER, Jens Konstantin, 47809 Krefeld (DE); SCHWINN, Jean-Pascal, 81539 München (DE); FÖRSTER, Till, 90763 Fürth (DE); HASSLER, Stefan, 91281 Kirchenthumbach (DE); HEILMANN, Reiner, 85658 Egmating (DE); LÖWENSTEIN, Lars, 90768 Fürth Vach (DE); STÜTZLE, Thorsten, 90480 Nürnberg (DE)
(86) Internationale Anmeldenummer: PCT/EP2013/077033
(87) Internationale Veröffentlichungsnummer: WO 2014/095961

(56) Entgegenhaltungen:
- EP-A2- 2 399 800
- DE-A1-102006 051 317
- DE-A1-102008 031 001
- DE-A1-102009 008 549
- US-A- 4 795 859
- US-A1- 2006 190 157

## Beschreibung

Die Erfindung betrifft eine Stromversorgungseinrichtung für ein Schienenfahrzeug, das zumindest einen angetriebenen Wagen umfasst, mit einem Zwischenkreis, einem Bremssystem und einem Energieversorgungssystem zur Versorgung des Bremssystems mit Betriebsenergie.

Bei Schienenfahrzeugen wird üblicherweise zwischen zwei Bremsarten, nämlich eine Betriebsbremsung und einer Notbremsung, auch Schnellbremsung oder Gefahrenbremsung genannt, unterschieden. Während die Betriebsbremsung zur Geschwindigkeitsreduzierung des Zugs dient, wird von der Notbremsung restriktiver verlangt, größtmögliche Sicherheit der Fahrgäste, des Personals und Dritter zu gewährleisten. Bei der Betriebsbremsung wird vorzugsweise eine elektrodynamische Bremse eingesetzt, bei der die Bremskraft durch die elektrischen Motoren des Schienenfahrzeugs erzeugt wird. Die während der Bremsung von den Motoren generatorisch erzeugte elektrische Energie wird entweder über einen Widerstand in Wärme umgewandelt, Hilfsaggregaten zugeführt oder in das Netz zurückgeführt.

Neben der elektrodynamischen Bremse verfügen Züge üblicherweise über eine vollwertige Reibungsbremse, bei der die Bremswirkung auf pneumatischem, hydraulischem und/oder mechanischem Weg erreicht wird. Der Grund hierfür liegt in der zu geringen Ausfallsicherheit der elektrodynamischen Bremse gegenüber der mechanischen Bremse, so dass für ausreichende Bremssicherheit auch im Notfall nicht auf eine Reibungsbremse verzichtet wird. Dies bedeutet allerdings, dass ein Motorwagen eines Zugs über zwei vollwertige Bremseinheiten verfügt, nämlich der Reibungsbremse und der elektrodynamischen Bremse. Die beiden Bremseinheiten weisen unterschiedliche Vorteile auf. Während die Reibungsbremse eine größere Sicherheit im Falle einer Notbremsung gewährleistet, weist die generatorische Bremse ökonomische Vorteile auf. So tritt beispielsweise kein Verschleiß bei Bremsbelägen und Bremsscheiben auf, und die zurück gewonnene Energie kann genutzt werden und kann somit den Gesamtstromverbrauch des Zugs reduzieren.

Eine Stromversorgungseinrichtung mit einem Zwischenkreis, einem Bremssystem und einem Energieversorgungssystem zur Versorgung des Bremssystems mit Betriebsenergie wird in der US 2006/190157 A1 beschrieben. Im Übrigen beschreibt die DE 10 2006 051 317 A1 ein Verfahren zum generatorischen Bremsen eines Schienenfahrzeugs. Zudem wird ein Schienenfahrzeug mit einer Zugsammelschiene in der EP 2 399 800 A2 offenbart.

Eine Stromversorgungseinrichtung für ein Schienenfahrzeug gemäß dem Oberbegriff des unabhängigen Anspruchs 1 ist aus der DE 10 2009 008 549 A1 offenbart.

Es ist daher eine Aufgabe der vorliegenden Erfindung, die Rahmenbedingungen für eine sichere elektrodynamische Bremsung zu verbessern.

Diese Aufgabe wird durch eine Stromversorgungseinrichtung gemäß dem unabhängigen Anspruch 1 gelöst.

Der Erfindung liegt die Überlegung zu Grunde, dass zum ausfallsicheren Betreiben einer elektrodynamischen Bremse eine sichere Bordnetzversorgung des Bremssystems erforderlich ist.

Durch die Bordnetzversorgung wird das Bremssystem mit Energie versorgt, das beispielsweise eine Ansteuerung und Regelung sowie Kühlaggregate für die Leistungskomponenten, die für die elektrodynamische Bremsung notwendig sind, enthält.

Zusätzlich kann bei Realisierung einer sicheren elektrodynamischen Bremse mit Asynchrontechnik noch ein Zwischenkreisnachladegerät sicher mit Energie versorgt werden, um so im Zwischenkreis, sicher die Energie zur Aufmagnetisierung der Asynchronmaschine zur Verfügung zu stellen.

Einige der oben genannten Aggregate sind an die Wechselstrom-Zugsammelschiene angeschlossen. Diese Zugsammelschiene kann über das Energieversorgungssystem aus dem Zwischenkreis mit Betriebsspannung versorgt werden. Es ist aber auch möglich, diese Aggregate bzw. das Bremssystem unmittelbar über die Energieversorgungseinheiten mit Betriebsenergie zu versorgen. Durch die redundante Energieversorgung des Bremssystems durch die beiden Energieversorgungseinheiten, entweder direkt oder über die Wechselstrom-Zugsammelschiene, kann die Sicherheit der Stromversorgung des Bremssystems mit seinen für die elektrodynamische Bremsung notwendigen Aggregate soweit erhöht werden, wie es für ein elektrodynamisches Bremssystem zur Durchführung einer Notbremsung auch ohne eine ausfallsichere mechanische Bremse nötig ist.

Insbesondere im Metrobereich kann ein elektrodynamisches Bremssystem innerhalb des gesamten Fahrgeschwindigkeitbereichs ein genügend großes Bremsmoment erzeugen, um auch eine Notbremsung zu bewerkstelligen. Durch die Erfindung können mit einer sicheren Stromversorgung Rahmenbedingungen geschaffen werden, mit denen eine ausreichend hohe Betriebssicherheit der elektrodynamischen Bremse erreicht wird. Zur Abbremsung des Zuges könnte somit auf ein mechanisches Bremssystem verzichtet werden.

Vorteilhafterweise erfolgt die redundante Energieversorgung der Wechselstrom-Zugsammelschiene durch die zwei Energieversorgungseinheiten aus dem Zwischenkreis. Die Energieversorgungseinheiten sind zweckmäßigerweise zwischen dem Zwischenkreis und der Wechselstrom-Zugsammelschiene angeordnet.

Weiter ist es vorteilhaft, wenn jede der beiden Energieversorgungseinheiten zur alleinigen Energieversorgung des Bremssystems und/oder der Wechselstrom-Zugsammelschiene vorbereitet und ausgelegt ist. Fällt eine der Energieversorgungseinheiten beispielsweise durch einen Defekt aus, so kann die andere der beiden Energieversorgungseinheiten das Bremssystem - entweder direkt oder über die Wechselstrom-Zugsammelschiene - alleine in der Weise versorgen, dass zumindest alle für eine Notbremsung notwendigen Aggregate ausreichend mit Strom, beziehungsweise Betriebsspannung versorgt werden. Selbstverständlich ist es auch möglich, mehr als zwei Energieversorgungseinheiten vorzusehen, die jeweils das Bremssystem und/oder die Wechselstrom-Zugsammelschiene mit Energie versorgen.

Die Stromversorgungseinrichtung ist eine Stromversorgungseinrichtung für ein Schienenfahrzeug, sie ist also dazu vorbereitet, die Betriebsaggregate eines Schienenfahrzeugs mit Betriebsenergie zu versorgen, insbesondere das Antriebssystem, ein Bremssystem sowie zweckmäßigerweise alle weiteren Aggregate, die mittelbar oder unmittelbar vom Zwischenkreis des Schienenfahrzeugs mit Energie versorgt werden. Die Stromversorgung ist daher zum Einbau in ein Schienenfahrzeug vorgesehen. Zweckmäßigerweise ist die Stromversorgungseinrichtung zumindest teilweise im angetriebenen Wagen angeordnet. Hierbei sind insbesondere die beiden Energieversorgungseinheiten vorteilhaft im angetriebenen Wagen angeordnet.

Das Bremssystem umfasst zweckmäßigerweise eine Bremskühleinheit und/oder einen Bremslüfter, insbesondere alle Aggregate, die mit Energie versorgt werden müssen, um eine Notbremsung schadlos durchführen zu können, ggf. ausgenommen die Antriebsmotoren selbst. Ein Eingangsstromrichter kann eingangsseitig direkt mit der Netzspannung des Bahnnetzes verbunden sein. Der Zwischenkreis ist zweckmäßigerweise ein Traktionszwischenkreis, der die Antriebsmotoren des angetriebenen Wagens insbesondere über Motorumrichter mit Antriebsenergie versorgt. Das Schienenfahrzeug kann zusätzlich zur Wechselstrom-Zugsammelschiene eine Gleichstrom-Zugsammelschiene aufweisen, die zweckmäßigerweise aus der Wechselstrom-Zugsammelschiene gespeist wird. Aus der Gleichstrom-Zugsammelschiene wird vorteilhafterweise das Bordnetz des Schienenfahrzeugs mit Energie versorgt.

Gemäß der Erfindung umfasst die Stromversorgungseinrichtung zumindest zwei Eingangsstromrichter für den angetriebenen Wagen zur Versorgung des Zwischenkreises mit Energie. Fällt ein Eingangsstromrichter oder eine der beiden Energieversorgungseinheiten aus, so kann durch die redundante Speisung der Wechselstrom-Zugsammelschiene durch die beiden Eingangsstromrichter gewährleistet werden, dass die Bremskomponenten stets mit Strom versorgt bleiben.

Zweckmäßigerweise sind die beiden Eingangsstromrichter jeweils für die Versorgung des Zwischenkreises, insbesondere des gesamten Zwischenkreises mit Energie ausgelegt. Jeder der beiden Eingangsstromrichter ist also dazu vorbereitet, auch bei einem Ausfall des anderen Eingangsstromrichters den Zwischenkreis mit ausreichend Energie zu versorgen, dass zumindest die für eine Notbremsung notwendigen Betriebsaggregate zum Einleiten und während der Bremsung zuverlässig mit Betriebsspannung versorgt werden.

Das Bremssystem kann über einen Bremskreis zur Versorgung der Aggregate des Bremssystems mit Energie an den Energieversorgungseinheiten angeschlossen sein. Der Bremskreis kann die Wechselstrom-Zugsammelschiene oder ein eigener Bremskreis sein, der zusätzlich zur Wechselstrom-Zugsammelschiene vorhanden ist und parallel zu dieser von den Energieversorgungseinheiten gespeist werden kann. Der Bremskreis kann ein einziger, zusammenhängender Kreis sein oder mehrere Kreissegmente aufweisen, die auch parallel geschaltet sein können, so dass ein Bremskreissegment einen ersten Teil der Bremsaggregate und ein anderes Bremskreissegment einen zweiten Teil der Bremsaggregate mit Betriebsenergie versorgt.

Eine vorteilhafte Ausführungsform der Erfindung sieht vor, dass die Stromversorgungseinrichtung eine Wechselstrom-Zugsammelschiene aufweist, durch die das Bremssystem mit Betriebsenergie versorgt wird, wobei die zwei Energieversorgungseinheiten zur redundanten Energieversorgung der Wechselstrom-Zugsammelschiene ausgeführt sind.

Weiter ist es vorteilhaft, wenn der Zwischenkreis ebenfalls in einer redundanten Weise vorliegt. Hierfür kann der Zwischenkreis zweckmäßigerweise zumindest zwei Segmente aufweisen, die beide zur Speisung der Wechselstrom-Zugsammelschiene mit Strom vorbereitet sind. Hierfür ist zweckmäßigerweise jedes der beiden Segmente über eine eigene Energieversorgungseinheit mit der Wechselstrom-Zugsammelschiene verbunden. Fällt ein Segment des Zwischenkreises aus, so kann die Wechselstrom-Zugsammelschiene dennoch weiter zuverlässig mit Strom versorgt werden. Hierfür ist es vorteilhaft, wenn die beiden Energieversorgungseinheiten jeweils einem eigenen Segment des Zwischenkreises zugeordnet sind und die beiden Segmente voneinander getrennt sind und über die Energieversorgungseinheiten zur redundanten Energieversorgung der Wechselstrom-Zugsammelschiene dienen. Vorteilhafterweise werden die beiden Segmente jeweils von einem eigenen Eingangsstromrichter gespeist.

Eine weitere vorteilhafte Ausführungsvariante der Erfindung sieht vor, dass jeder Eingangsstromrichter nur eines der Segmente speist. Die Stromversorgungseinrichtung kann insofern in zwei gleiche Teile mit jeweils einem Zwischenkreissegment und einer Energieversorgungseinheit aufgeteilt werden, wobei jeder Teil in Auslegung und Leistung gleichwertig sein kann und den anderen ersetzen kann. Während des regulären Betriebs speist jedes Segment einen zweckmäßigerweise gleichen Teil der Antriebe des angetriebenen Wagens und je eine der Energieversorgungseinheiten, die in ihrer Leistung zweckmäßigerweise gleich ausgeführt sind.

Erfindungsgemäß weist die Stromversorgungseinrichtung zwei Eingangsstromrichter für den angetriebenen Wagen zur jeweiligen Versorgung des gesamten Zwischenkreises mit Energie auf, sowie ein Schaltmittel zum Verbinden beider Eingangsstromrichter mit zumindest einer der Energieversorgungseinheiten zu deren Energieversorgung. Auf diese Weise kann diese Energieversorgungseinheit von beiden Eingangsstromrichtern gespeist werden, sodass diese Energieversorgungseinheit stets die Wechselstrom-Zugsammelschiene mit Energie versorgen kann, auch wenn einer der Eingangsstromrichter ausfällt.

Um eine sehr hohe Sicherheit der Stromversorgung zu erreichen, ist es vorteilhaft, die Wechselstrom-Zugsammelschiene je nach Betriebssituation in verschiedenen Betriebsmodi versorgen zu können. In einem der Betriebsmodi sind die beiden Segmente des Zwischenkreises miteinander verbunden und werden aus beiden Eingangsstromrichtern gespeist. Fällt einer der Eingangsstromrichter aus, so speist der verbleibende Eingangsstromrichter den gesamten Zwischenkreis.

Je nach vorhandener Leistung der Eingangsstromrichter kann es zweckmäßig sein, die beiden Segmente voneinander zu trennen, sodass es bei einem Ausfall eines Eingangsstromrichters, z.B. bei einem vom Eingangsstromrichter verursachten Zwischenkreiskurzschluss, nur noch ein betriebenes Segment gibt. Hierzu ist das Schaltmittel erfindungsgemäß zum Auftrennen des Zwischenkreises in zwei Segmente vorbereitet, die voneinander getrennt sind und von jeweils einem eigenen Eingangsstromrichter gespeist werden und die jeweils eine eigene Energieversorgungseinheit zur Einspeisung von Energie in die Wechselstrom-Zugsammelschiene aufweisen.

Ein weiterer Betriebsmodus sieht vor, dass die beiden Segmente zwar getrennt sind, jedoch beide Energieversorgungseinheiten aus zumindest einem der beiden Eingangsstromrichter gespeist werden können. Fällt der andere Eingangsstromrichter aus, so fällt auch dessen Segment aus und es sind nur noch diejenigen Fahrmotoren des angetriebenen Wagens antriebsbereit, die an dem Segment hängen, das aus dem verbleibenden Eingangsstromrichter gespeist wird. Die an dem anderen Segment hängenden Fahrmotoren gehen - jedenfalls was den Antrieb betrifft - außer Betrieb. Allerdings sind zweckmäßigerweise beide Energieversorgungseinheiten mit dem verbleibenden Eingangsstromrichter verbunden und können beide die Wechselstrom-Zugsammelschiene mit ausreichend Energie versorgen.

Erfindungsgemäß ist das Schaltmittel zum Verbinden der beiden Energieversorgungseinheiten mit zumindest einem der beiden Eingangsstromrichter bei ansonsten getrennten Segmenten vorgesehen.

In einer weiteren vorteilhaften Ausführungsform der Erfindung weisen die beiden Energieversorgungseinheiten verschiedene Leistungen auf. Hierbei kann eine leistungsstärkere Energieversorgungseinheit für den regulären Betrieb vorbereitet sein, die die Wechselstrom-Zugsammelschiene im regulären Betrieb alleine speist. Die schwächere Energieversorgungseinheit kann für den Notfallbetrieb verwendet werden. Insbesondere kann sie bei Ausfall der stärkeren Energieversorgungseinheit an die Wechselstrom-Zugsammelschiene angeschaltet werden. Hierzu ist das Schaltmittel zweckmäßigerweise dazu vorgesehen, die schwächere Energieversorgungseinheit an beide Eingangsstromrichter anzuschalten, entweder separat oder an beide gemeinsam. Die Energieversorgungseinheit mit der geringeren Leistung ist somit mit beiden Eingangsstromrichtern verbindbar und die stärkere Energieversorgungseinheit ist im regulären Betrieb zur alleinigen Energieversorgung der Wechselstrom-Zugsammelschiene ausgelegt und vorbereitet.

Die Sicherheit der Stromversorgung der für eine Notbremsung notwendigen Betriebsaggregate kann weiter erhöht werden, wenn die Stromversorgungseinrichtung eine Gleichstromquelle aufweist, die mit zumindest einer der Energieversorgungseinheiten verbunden ist oder verbindbar ist und dazu ausgelegt ist, die Wechselstrom-Zugsammelschiene über die Energieversorgungseinheit mit Energie zu versorgen. Die Gleichstromquelle ist zweckmäßigerweise zwischenkreisfrei, also zumindest temporär unabhängig von einer Versorgung durch den Zwischenkreis. Die Gleichstromquelle ist zweckmäßigerweise ein Gleichstromspeicher und kann eine Batterie oder eine Gleichstrom-Zugsammelschiene sein. Zweckmäßigerweise sind bei dieser Ausführungsform der Erfindung die beiden Energieversorgungseinheiten mit unterschiedlicher Leistung ausgelegt und die Gleichstromquelle ist mit der schwächeren Energieversorgungseinheit verbunden.

Zur Bremsung eines Zugs mit elektrodynamischen Bremsen werden die Fahrmotoren zur Erzeugung des Bremsmoments verwendet. Hierbei ist es jedoch vorteilhaft, wenn auch die nicht angetriebenen Wagen zur Bremsung beitragen und ein eigenes Bremsmoment erzeugen können. Hierbei sind jedoch auch die Bremsaggregate der nicht angetriebenen Wagen zuverlässig mit Betriebsspannung zu versorgen. Die nicht angetriebenen Wagen des Zugs werden üblicherweise auch über eine Gleichstrom-Zugsammelschiene mit Betriebsspannung versorgt. Diese kann von der Wechselstrom-Zugsammelschiene über entsprechende gesteuerte Umrichter oder direkt von einem Eingangsstromrichter gespeist werden.

Die Erfindung ist insofern gerichtet auf eine Stromversorgungseinrichtung für ein Schienenfahrzeug, das mehrere nicht angetriebene Wagen umfasst mit einer Gleichstrom-Zugsammelschiene und einem Energieversorgungssystem zur Einspeisung von elektrischer Energie in die Gleichstrom-Zugsammelschiene. Es wird vorgeschlagen, dass das Energieversorgungssystem erfindungsgemäß zumindest zwei Energieversorgungseinheiten zur redundanten Energieversorgung der Gleichstrom-Zugsammelschiene enthält. Die Bremsaggregate der nicht angetriebenen Wagen können durch diese redundante Energieversorgung zuverlässig mit Betriebsspannung versorgt werden, wenn eine der Energieversorgungseinheiten durch einen Defekt ausfallen sollte.

Die Energieversorgungseinheiten können jeweils einen gesteuerten Umrichter umfassen, der zwischen eine Wechselstrom-Zugsammelschiene und die Gleichstrom-Zugsammelschiene geschaltet ist.

Die nicht angetriebenen Wagen eines Schienenfahrzeugs sollen auch dann bremsfähig bleiben, wenn das Schienenfahrzeug unbeabsichtigterweise während der Fahrt getrennt wird. Hierzu ist es vorteilhaft, wenn die die Gleichstrom-Zugsammelschiene speisenden Energieversorgungseinheiten in verschiedenen Wagen des Zuges angeordnet sind. Besonders vorteilhaft ist die Anordnung an der Zugspitze und dem Zugende, also im ersten und letzten Wagen des Schienenfahrzeugs, sodass bei einer Zugtrennung beide Segmente der Gleichstrom-Zugsammelschiene zuverlässig mit Betriebsspannung versorgt werden.

Um auch bei einer unbeabsichtigten mehrfachen Zugtrennung eine zuverlässige Stromversorgung eines jeden Wagens des Zuges zu gewährleisten, ist es vorteilhaft, wenn mehrere, direkt hintereinander angeordnete Wagen, insbesondere jeder Wagen des Schienenfahrzeugs, also des gesamten Zuges, eine Energieversorgungseinheit zur Energieversorgung der Gleichstrom-Zugsammelschiene aufweist.

Insbesondere bei einer mehrfachen Zugtrennung kann es vorkommen, dass ein abgetrennter Zugteil über keine Verbindung mit der Bahnnetzspannung verfügt. Eine Speisung der Gleichstrom-Zugsammelschiene von außen ist nicht möglich. Um auch in einem solchen Fall eine zuverlässige Stromversorgung der Bremsaggregate aufrecht zu erhalten, ist es vorteilhaft, über eine zu den Energieversorgungseinheiten zusätzliche Gleichstromquelle zu verfügen, die zum Speisen der Gleichstrom-Zugsammelschiene vorbereitet ist. Die zusätzliche Gleichstromquelle kann aus einem Gleichstrom-Bus auf Zwischenkreisniveau gespeist werden oder ein aufladbarer Gleichstromspeicher sein, wie eine Batterie. Vorteilhafterweise ist der Gleichstromspeicher zum Speisen der Gleichstrom-Zugsammelschiene in einem antriebslosen Wagen vorgesehen.

Weiter ist es vorteilhaft, wenn der Gleichstromspeicher Teil einer die Gleichstrom-Zugsammelschiene speisenden Energieversorgungseinheit ist.

Weiter ist es vorteilhaft, wenn zumindest einige, insbesondere alle die Gleichstrom-Zugsammelschiene speisenden Energieversorgungseinheiten jeweils zumindest einen, zweckmäßigerweise zumindest zwei Gleichstromspeicher aufweisen. Diese können aufladbare Batterien sein, die von der jeweiligen Energieversorgungseinheit mit Ladestrom versorgt werden.

Vorteilhafterweise umfasst die Stromversorgungseinrichtung eine Wechselstrom-Zugsammelschiene. An diese können die zwei Energieversorgungseinheiten per Parallelschaltung angeschlossen sein. Auch kann die Wechselstrom-Zugsammelschiene an die zwei Energieversorgungseinheiten angeschlossen sein. Auf diese Weise kann die Stromversorgung des Bremssystems über die Zugsammelschiene erfolgen. Alternativ oder zusätzlich kann eine Wechselstrom-Leitung vorhanden sein, die durch zumindest eine der Energieversorgungseinheiten und/oder eine weitere Energieversorgungseinheit gespeist wird und durch die das Bremssystem mit Betriebsenergie gespeist wird. Es ist insofern möglich, eine weitere Redundanz zur Stromversorgung des Bremssystems zu schaffen, nämlich mittels einer zusätzlichen Wechselstromleitung, oder die redundante Stromversorgung des Bremssystems nur über die Wechselstromleitung zu führen.

Zusätzlich kann eine Wechselstrom-Leitung vorhanden sein, die durch zumindest eine der Energieversorgungseinheiten und/oder eine weitere Energieversorgungseinheit gespeist wird und durch die das Bremssystem mit Betriebsenergie versorgt wird.

Zweckmäßigerweise sind mehrere Energieversorgungseinheiten parallel an der Wechselstrom-Leitung angeschlossen. Dabei ist die Nennleistung der angeschlossenen Energieversorgungseinheiten üblicherweise so bemessen, dass die Versorgung der Wechselstrom-Leitung auch von nur einer der Energieversorgungseinheiten aufrecht erhalten werden kann. Dies kann z.B. bei einem Ausfall einer der Energieversorgungseinheiten notwendig sein. Zweckmäßigerweise werden in dieser Betriebssituation alle an die Wechselstrom-Leitung angeschlossenen Betriebsaggregate ausreichend mit Strom beziehungsweise Betriebspannung versorgt.

Die Wechselstrom-Leitung ist von der Wechselstrom-Zugsammelschiene physikalisch verschieden und kann über ein oder mehrere Schaltmittel, das/die für diesen Zweck vorhanden ist/sind, mit bzw. von dieser verbunden und getrennt werden.

Um die Sicherheit der Stromversorgung noch weiter zu erhöhen, können auch mehrere Wechselstrom-Leitungen zur Versorgung des Bremssystems vorgesehen werden. Zweckmäßigerweise ist an jede der Wechselstrom-Leitungen zumindest eine der Energieversorgungseinheiten und/oder eine weitere Energieversorgungseinheit angeschlossen. Gestaltungsbedingt kann so einerseits das Bremssystem bei einem Defekt der Wechselstrom-Zugsammelschiene oder bei einem Abfall des Spannungspotentials der Wechselstrom-Zugsammelschiene unter das erforderliche Nennpotential weiterhin über die Wechselstrom-Leitung mit Betriebsenergie versorgt werden. Ein solcher Abfall kann z.B. durch einen nicht abgeschalteten Erd- oder Kurzschluss in einem der an die Wechselstrom-Zugsammelschiene angeschlossenen Verbraucher verursacht werden. Andererseits kann bei einer Unterbrechung der Speisung der Wechselstrom-Leitung die sichere Energieversorgung des Bremssystems weiterhin über die Wechselstrom-Zugsammelschiene gewährleistet werden. Eine Unterbrechung der Speisung kann z.B. durch einen Defekt der Energieversorgungseinheiten oder der Eingangsstromrichter, die üblicherweise an die Energieversorgungseinheiten angeschlossen und zu deren Stromversorgung vorbereitet sind, oder einer anderen zweckmäßigen Stromquelle zur Speisung der Wechselstrom-Leitung auftreten.

In einer vorteilhaften Ausführungsvariante erfolgt die Speisung der Wechselstrom-Leitung aus zwei Energieversorgungseinheiten, die über eine Parallelschaltung an die Wechselstrom-Leitung angeschlossen sind. Bei einem Defekt einer der beiden Energieversorgungseinheiten kann die Speisung der Wechselstrom-Leitung von der anderen Energieversorgungseinheit aufrecht erhalten werden. Selbstverständlich ist es auch möglich, mehr als zwei Energieversorgungseinheiten für diesen Zweck vorzusehen.

Die Stromversorgungseinrichtung ist vorteilhaft dadurch weitergebildet, dass mehrere Wechselstrom-Leitungen zur Versorgung des Bremssystems ausgeführt sind. Die Versorgung der Wechselstrom-Leitungen mit Betriebsenergie erfolgt dabei zweckmäßigerweise über die beiden Energieversorgungseinheiten, die in Parallelschaltung an die Wechselstrom-Leitungen angeschlossen sein können.

In einer weiteren vorteilhaften Ausgestaltung der Erfindung wird vorgeschlagen, dass die beiden Energieversorgungseinheiten, die zur Speisung der Wechselstrom-Zugsammelschiene dienen, an jeweils einen oder an einen einzigen Eingangsstromrichter angeschlossen sind. Vorzugsweise ist eine weitere Energieversorgungseinheit zur Versorgung einer weiteren Wechselstrom-Leitung vorgesehen und an einen der oder den Eingangsstromrichter der beiden anderen Energieversorgungseinheiten angeschlossen.

In einer anderen Weiterbildung der Erfindung kann die weitere Energieversorgungseinheit auch an mehr als an einen Eingangsstromrichter angeschlossen sein. Dabei ist die Nennleistung der weiteren Energieversorgungseinheit vorteilhafterweise so bemessen, dass die Versorgung der Betriebsaggregate mit Betriebsspannung zumindest für einen Notfallbetrieb auch bei einem Ausfall der beiden anderen Energieversorgungseinheiten gewährleistet ist. Die weitere Wechselstrom-Leitung kann dabei kopplungsfrei, also zumindest temporär physikalisch getrennt, von der Wechselstrom-Zugsammelschiene ausgeführt sein. Vorteilhafterweise umfasst die Anordnung ein Schaltmittel, dass zum Verbinden und Trennen der weiteren Wechselstrom-Leitung mit bzw. von dem Bremssystem ausgeführt ist.

Im Störfall kann es insbesondere zu einer Ein- oder Mehrfachtrennung des Zuges und/oder zu einer Abtrennung der Eingangstromrichter von der Bahnnetzspannung kommen. Eine Speisung der Energieversorgungseinheiten und damit der Wechselstrom-Zugsammelschiene und den Wechselstrom-Leitungen von außen, z.B. über das Bahnnetz, ist dann nicht mehr möglich. Um in einem solchen Fall die sichere Versorgung des Bremssystems mit Betriebsenergie sicherzustellen, ist es vorteilhaft, mindestens eine Energieversorgungseinheit der Wechselstrom-Leitung über eine Gleichstromquelle zu speisen. Diese Gleichstromquelle kann beispielsweise als Batterie ausgeführt sein.

Die Gleichstromquelle kann zwischenkreisfrei, also zumindest temporär physikalisch getrennt von dem Zwischenkreis der Stromversorgungseinrichtung, angeordnet sein. Die Wechselstrom-Leitung kann dabei zumindest temporär physikalisch getrennt von der Wechselstrom-Zugsammelschiene sein. Weiterhin kann die Wechselstrom-Leitung parallel zu einer anderen Wechselstrom-Leitung ausgeführt sein kann. Vorteilhafterweise umfasst die Anordnung ein Schaltmittel, dass zum Verbinden und Trennen der Wechselstrom-Leitung mit bzw. von dem Bremssystem ausgeführt ist.

Gemäß einer bevorzugten Ausführungsform der Erfindung sind die Betriebsaggregate des Bremssystems, wie beispielsweise die Bremskühleinheit und der Bremslüfter, redundant ausgeführt. Dabei sind die einzelnen Betriebsaggregate vorteilhafterweise in der Art ausgeführt, dass eine sichere Bremsung auch beim Ausfall eines oder mehrere Betriebsaggregate des gleichen Typs gewährleistet ist.

Es wird außerdem vorgeschlagen, dass jedes der redundant ausgeführten Betriebsaggregate über eine oder mehrere Wechselstrom-Zuleitungen verfügt. Dabei sind die Wechselstrom-Zuleitungen vorteilhafterweise zur Anbindung der Bremsaggregate an die Energieversorgung des Bremssystems ausgeführt. Üblicherweise wird die Anbindung der Wechselstrom-Zuleitungen an eine Wechselstrom-Leitung vorgenommen. In Ausführungsvarianten die vorteilhafterweise mehr als eine Wechselstrom-Leitung vorsehen, kann die Anbindung der Wechselstrom-Zuleitungen auch an mehr als eine einzige Wechselstrom-Leitung vorgenommen sein.

Zweckmäßigerweise ist jedes der Betriebsaggregate über ein Schaltmittel mit der Energieversorgung des Bremssystems verbind- und/oder trennbar. Das Schaltmittel kann dabei zwischen der Wechselstrom-Leitung und der Wechselstrom-Zuleitung angeordnet sein. Auf diese Weise kann ein defektes Betriebsaggregat von der Energieversorgung getrennt werden, um zu verhindern, dass das Spannungspotential der Energieversorgung auf ein zur sicheren Versorgung der Bremssysteme nicht ausreichendes Niveau verringert wird.

Die Unabhängigkeit, Rückwirkungsfreiheit und Verfügbarkeit der Energieversorgung des Bremssystems kann durch erfindungsgemäß vorteilhafte Ausführungsvarianten der Anbindung zwischen den Wechselstrom-Leitungen und den Wechselstrom-Zuleitungen der Betriebsaggregate weiter erhöht werden.

In einer vorteilhaften Weiterbildung der Erfindung verfügt jedes der Betriebsaggregate über mehrere Wechselstrom-Zuleitungen. Zweckmäßigerweise entspricht die Anzahl der Wechselstrom-Zuleitungen der Anzahl der Wechselstrom-Leitungen. Dabei kann jede der Wechselstrom-Zuleitungen an eine und nur eine der Wechselstrom-Leitungen angeschlossen sein.

Eine weitere vorteilhafte Ausführungsvariante sieht vor, dass die redundant ausgeführten Betriebsaggregate in Aggregategruppen, also in Untermengen der Menge aller Betriebsaggregate, aufgeteilt sind. Zweckmäßigerweise ist in jeder Aggregategruppe jeweils mindestens ein Aggregat eines Typs, d.h. beispielsweise jeweils ein Bremslüfter und ein Bremskühlaggregat, vertreten. Vorteilhafterweise wird jede der Aggregategruppen von einer einzigen Wechselstrom-Leitung gespeist. Dabei entspricht die Anzahl der Aggregategruppen der der Wechselstrom-Leitungen und jedes einzelne Aggregat ist nur in einer einzigen Gruppe vertreten.

Es wird vorgeschlagen, dass das Energieversorgungssystem zumindest zwei am Zwischenkreis angeordnete Energieversorgungseinheiten für den angetriebenen Wagen enthält, die das Bremssystem redundant mit Betriebsenergie versorgen.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale.

Es zeigen:
- FIG 1: einen angetriebenen und einen nicht angetriebenen Wagen eines Schienenfahrzeugs mit einer Stromversorgungseinrichtung,
- FIG 2: die Stromversorgungseinrichtung aus FIG 1 mit zwei getrennten Zwischenkreissegmenten,
- FIG 3: eine andere Ausführungsform der Stromversorgungseinrichtung mit verbindbaren Segmenten des Zwischenkreises,
- FIG 4: eine weitere Ausführungsform mit einem Gleichstromspeicher zur Speisung einer Wechselstrom-Zugsammelschiene,
- FIG 5: eine Gleichstrom-Zugsammelschiene eines Zugs mit mehreren nicht angetriebenen Wagen, die von zwei Energieversorgungseinheiten gespeist wird,
- FIG 6: eine Gleichstrom-Zugsammelschiene, die aus jedem Wagen mit einer Energieversorgungseinheit gespeist wird,
- FIG 7: die Stromversorgungseinrichtung aus FIG 1 mit separaten Wechselstrom-Leitungen und redundanter Ausführung der Betriebsaggregate des Bremssystems,
- FIG 8: eine Stromversorgungseinrichtung wie in FIG 7 mit einer weiteren Energieversorgungseinheit,
- FIG 9: eine weitere Ausführungsform mit einer Gleichstromquelle zur Speisung der dritten Energieversorgungseinheit,
- FIG 10: eine Variante der Stromversorgungseinrichtung bei der die Betriebsaggregate des Bremssystems ausschließlich aus den Wechselstrom-Leitungen versorgt werden,
- FIG 11: eine elektrische Anbindung der Betriebsaggregate aus FIG 7 über separate Wechselstrom-Zuleitungen und
- FIG 12: redundante Betriebsaggregatgruppen mit jeweils einer eigenen Wechselstrom-Zuleitung.

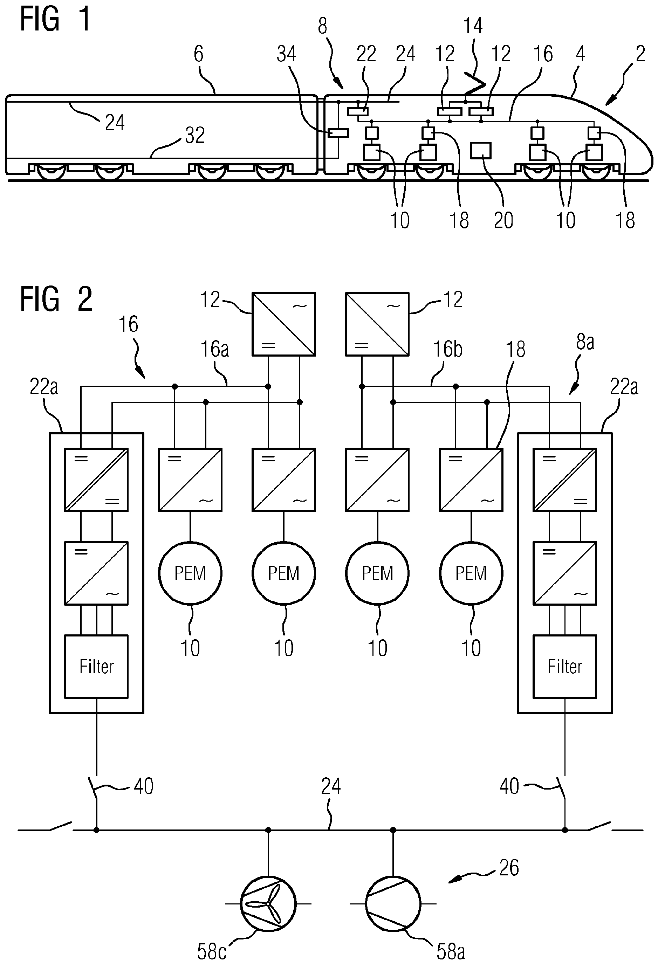

FIG 1 zeigt eine schematische Darstellung eines Schienenfahrzeugs 2, das mindestens einen angetriebenen Wagen 4 und mehrere nicht angetriebene Wagen 6 aufweist, von denen der Übersichtlichkeit halber nur angetriebener Wagen 4 und ein nicht angetriebener Wagen 6 dargestellt sind. Das Schienenfahrzeug 2 enthält im angetriebenen Wagen 4 eine Stromversorgungseinrichtung 8 zum Versorgen der Antriebsmotoren 10 und der Aggregate des Schienenfahrzeugs 2 mit der zum Betrieb notwendigen Betriebsspannung.

Die Stromversorgungseinrichtung 8 umfasst zwei als gesteuerte Umrichter ausgeführte Eingangsstromrichter 12, die über einen Stromabnehmer 14 und gegebenenfalls einen Transformator mit einer Oberleitung eines Bahnnetzes verbunden sind und aus der Netzspannung der Oberleitung - gegebenenfalls über mehrere Stufen - eine Zwischenkreisgleichspannung in einem Zwischenkreis 16 erzeugen. Generell muss der Zwischenkreis 16 jedoch kein Spannungszwischenkreis sein.

Mit dem Zwischenkreis 16 elektrisch verbunden sind mehrere Motorumrichter 18, die im vorliegenden Ausführungsbeispiel als Pulswechselrichter ausgeführt sind. Die Motorumrichter 18 wandeln die Zwischenkreisgleichspannung in drei Phasen-Wechselspannung für die Antriebsmotoren 10 um, wobei jeder der Motorumrichter 18 jeweils einen Antriebsmotor 10 versorgt. Es ist auch möglich, dass ein Motorumrichter 18 mehrere Antriebsmotoren 10 mit der notwendigen Betriebsspannung versorgt. Die Versorgung der Antriebsmotoren 10 mit Betriebsspannung wird von einer Steuereinheit 20 gesteuert, die den Betrieb der Stromversorgungseinrichtung 8 und der Antriebsmotoren 10 steuert.

Eine detailiertere Darstellung eines Ausschnitts aus der Stromversorgungseinrichtung 8 ist in FIG 2 dargestellt. Die Stromversorgungseinrichtung 8 ist in FIG 2 mit dem Bezugszeichen 8a bezeichnet. In den Figuren sind an sich gleiche Bauteile, die jedoch geringfügige Unterschiede aufweisen, z.B. in Abmessung, Position und/oder Funktion, mit der gleichen Bezugsziffer und anderen Bezugsbuchstaben gekennzeichnet. Wird die Bezugsziffer alleine ohne einen Bezugsbuchstaben erwähnt, so sind die entsprechenden Bauteile aller Ausführungsbeispiele angesprochen.

Der Zwischenkreis 16 ist in zwei voneinander getrennte Segmente 16a und 16b aufgeteilt, die jeweils von einem Eingangsstromrichter 12 mit Energie versorgt werden. Die beiden Segmente 16a und 16b des Zwischenkreises 16 sind wie zwei eigenständige und separate Zwischenkreise, die unabhängig voneinander betrieben werden. An jedes der Segmente 16a, 16b ist ein Teil der Motorumrichter 18 angeschlossen, sodass ein Teil der Antriebsmotoren 10 des angetriebenen Wagens 4 von dem einen Segment 16a und die anderen der Antriebsmotoren 10 vom anderen Segment 16b mit Betriebsenergie versorgt werden. An jedes der Segmente 16a, 16b ist außerdem eine Energieversorgungseinheit 22a angeschlossen, über die eine Wechselstrom-Zugsammelschiene 24 mit elektrischer Energie für Betriebsaggregate eines Bremssystems 26 des angetriebenen Wagens 4, insbesondere der elektrodynamischen Bremse, mit Betriebsenergie versorgt. In FIG 2 sind nur zwei Aggregate 58a und 58c stellvertretend für die Betriebsaggregate an einem Bremssystem 26 gezeigt, wobei beide Aggregate zusammen einem Bremssystem 26 zugeordnet sein können oder jedes für sich einem Bremssystem 26 zugeordnet sein kann kann.

Über die beiden Energieversorgungseinheiten 22a wird die Wechselstrom-Zugsammelschiene 24 zweifach, also redundant, mit Betriebsenergie versorgt. Die Energieversorgungseinheiten 22a umfassen jeweils einen Gleichstromumformer, einen Wechselrichter und einen Filter. Alternativ wäre es möglich, dass die Energieversorgungseinheiten 22 parallel zur Wechselstrom-Zugsammelschiene 24 das Bremssystem 26 versorgen, so dass dieses durch die beiden Energieversorgungseinheiten 22 ebenfalls redundant versorgt ist.

Fällt während des Betriebs des Schienenfahrzeugs 2 eine Energieversorgungseinheit 22a wegen eines Defekts aus, so wird die Wechselstrom-Zugsammelschiene 24 zuverlässig über die andere der beiden Energieversorgungseinheiten 22a versorgt. Das Gleiche gilt für den Ausfall eines Eingangsstromrichters 12, durch den zwar im Falle eines Defekts das gesamte angeschlossene Segment 16a, 16b stromlos ist, das andere der beiden Segmente 16b, 16a bleibt hierbei jedoch in Betrieb und kann die Wechselstrom-Zugsammelschiene 24 über die verbleibende Energieversorgungseinheit 22a mit ausreichend Betriebsenergie versorgen.

Die beiden Energieversorgungseinheiten 22a sind in ihrer Leistung so ausgelegt, dass sie gemeinsam genügend Energie für den Betrieb aller Betriebsaggregate zur Verfügung stellen können. Bei einem Ausfall eines Eingangsstromrichters 12 oder einer Energieversorgungseinheit 22a steht weniger Leistung in der Wechselstrom-Zugsammelschiene 24 zur Verfügung, beispielsweise nur die Hälfte der ansonsten verfügbaren Leistung, wenn die beiden Energieversorgungseinheiten 22a die gleiche Leistung aufweisen. Hierdurch kann es zu einem eingeschränkten Betrieb der Betriebsaggregate des Bremssystems 26 an der Wechselstrom-Zugsammelschiene 24 kommen. Es ist jedoch stets gewährleistet, dass diejenigen Betriebsaggregate 26, die für die elektrodynamische Bremse benötigt werden, ausreichend versorgt werden.

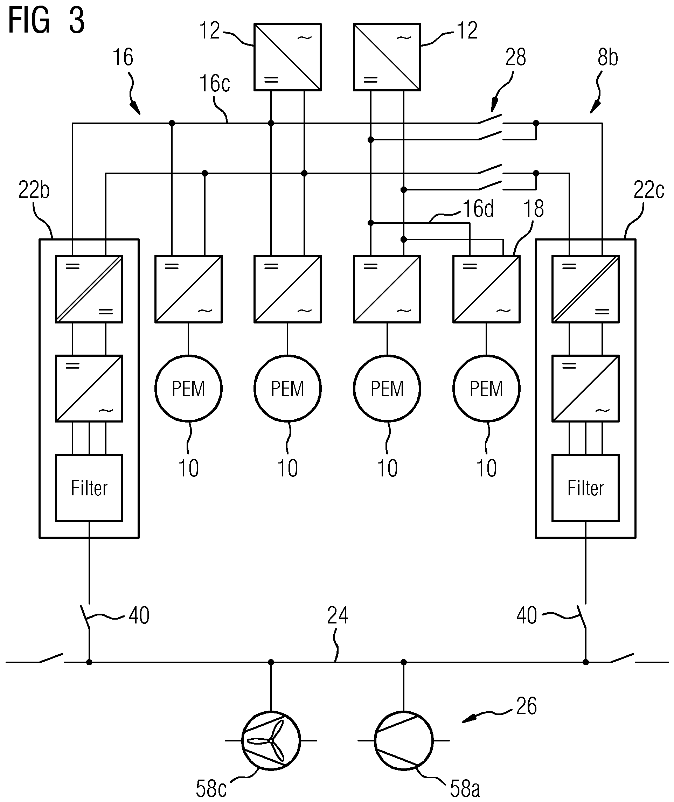

Ein weiteres Beispiel einer Stromversorgungseinrichtung 8b ist in FIG 3 schematisch gezeigt. Die Beschreibungen nachfolgender Ausführungsbeispiele beschränken sich generell im Wesentlichen auf die Unterschiede zu den vorhergehenden Ausführungsbeispielen vorhergehender FIGen, auf die bezüglich gleich bleibender Merkmale und Funktionen verwiesen wird. Im Wesentlichen gleich bleibende Bauteile sind grundsätzlich mit den gleichen Bezugszeichen beziffert und nicht erwähnte Merkmale sind in den folgenden Ausführungsbeispielen übernommen, ohne dass sie erneut beschrieben sind.

Im Unterschied zu dem Ausführungsbeispiel aus FIG 2 sind die beiden Segmente 16c, 16d des Zwischenkreises 16 über ein Schaltmittel 28 miteinander verbunden, durch das mehrere Betriebsmodi der Stromversorgungseinrichtung 8b geschaltet werden können. Das Schaltmittel 28 umfasst hierfür auf beiden Gleichstromphasen beider Eingangsstromrichter 12 jeweils einen Schalter, so dass vier betriebswesentliche Schaltzustände schaltbar sind.

Ist der linke Eingangsstromrichter 12 von der rechten Energieversorgungseinheit 22c getrennt, also jeweils der in FIG 3 obere Schalter einer Phase des Schaltmittels 28 geöffnet und der andere geschlossen, so sind die beiden Segmente 16c, 16d getrennt voneinander, so dass der in FIG 2 gezeigte Zustand hergestellt ist.

Sind alle Schalter offen, so ist zusätzlich zu der Trennung der Segmente 16c, 16d auch die Energieversorgungseinheit 22c von beiden Eingangsstromrichtern 12 getrennt und somit außer Betrieb.

Sind alle Schalter hingegen geschlossen, so sind die beiden Segmente 16c, 16d miteinander verbunden, so dass alle Motorumrichter 18 und beide Energieversorgungseinheiten 22b, 22c von beiden Eingangsstromrichtern 12 gemeinsam versorgt werden.

Ist der obere Schalter geschlossen und der untere Schalter jeder der beiden Phasen offen, so versorgt der linke Eingangsstromrichter 12 nicht nur das Segment 16a des Zwischenkreises 16, sondern zusätzlich die Energieversorgungseinheit 22c. Der übrige Teil des rechten Segments 16d des Zwischenkreises 16 ist vom linken Eingangsstromrichter 12 und dem Segment 16c getrennt und wird durch den rechten Eingangsstromrichter 12 versorgt.

Die beiden Energieversorgungseinheiten 22b, 22c können mit unterschiedlicher Leistung ausgelegt sein, wobei die Leistung der Energieversorgungseinheit 22b alleine ausreicht, um die Wechselstrom-Zugsammelschiene 24 und alle an ihr angeschlossenen Betriebsaggregate des Bremssystems 26 in jeder regulären Betriebssituation zu versorgen. Im regulären Betrieb des Schienenfahrzeugs 2 ist daher das Schaltmittel 28 offen geschaltet, so dass alle Schalter des Schaltmittels 28 offen sind. In diesem Betriebszustand versorgt der linke Eingangsstromrichter 12 das linke Zwischenkreissegment 16c und der rechte Eingangsstromrichter 12 versorgt nur die beiden Motorumrichter 18 der rechten Seite, beziehungsweise des rechten Zwischenkreises 16d mit den daran angeschlossenen Antriebsmotoren 10. Die rechte Energieversorgungseinheit 22c ist außer Betrieb. Die Wechselspannungs-Zugsammelschiene 24 wird daher nur von der leistungsstärkeren Energieversorgungseinheit 22b mit Betriebsenergie versorgt.

Fällt die leistungsstärkere Energieversorgungseinheit 22b wegen eines Defekts aus, so schaltet die Steuereinheit 20 das Schaltmittel 28 so, dass die Energieversorgung der Wechselstrom-Zugsammelschiene 24 ausschließlich über die leistungsschwächere Energieversorgungseinheit 22c erfolgt. Dies kann dadurch geschehen, dass alle Schalter geschlossen werden und die beiden Zwischenkreissegmente 16c, 16d zusammengeschaltet werden. Ebenso ist es möglich, den oberen Schalter zu schließen und den unteren Schalter offen zu halten, so dass die leistungsschwächere Energieversorgungseinheit 22c auch durch den linken Eingangsstromrichter 12 versorgt wird. Ebenso ist es möglich, den oberen Schalter offen zu halten und den unteren zu schließen, so dass die Energieversorgungseinheit 22c vom rechten Eingangsstromrichter 12 versorgt wird.

Fällt einer der beiden Eingangsstromrichter 12 aus, so kann die leistungsschwächere Energieversorgungseinheit 22c wahlweise durch den verbleibenden Eingangsstromrichter 12 versorgt werden, indem der obere Schalter geschlossen und der untere offen ist und der linke Eingangsstromrichter 12 die Energieversorgungseinheit 22c versorgt oder der obere Schalter offen ist und der untere Schalter geschlossen, so dass der rechte Eingangsstromrichter 12 die Energieversorgungseinheit 22c versorgt. Dies ist insbesondere vorteilhaft, wenn einer der Eingangsstromrichter 12 und die leistungsstärkere Energieversorgungseinheit 22b ausfällt.

Auf diese Weise ist gewährleistet, dass die Wechselstrom-Zugsammelschiene 24 auch dann zuverlässig mit Betriebsenergie versorgt wird, wenn zumindest ein Eingangsstromrichter 12 und eine Energieversorgungseinheit 22b, 22c intakt sind. Wird die Wechselstrom-Zugsammelschiene 24 nur durch die leistungsschwächere Energieversorgungseinheit 22c versorgt, so steht möglicherweise nicht genügend Energie für alle an dieser Sammelschiene angeschlossenen Betriebsaggregate zur Verfügung. Es ist jedoch genug Leistung vorhanden, um die für eine elektrodynamische Notbremsung notwendigen Betriebsaggregate des Bremssystems 26 ausreichend mit Energie zu versorgen.

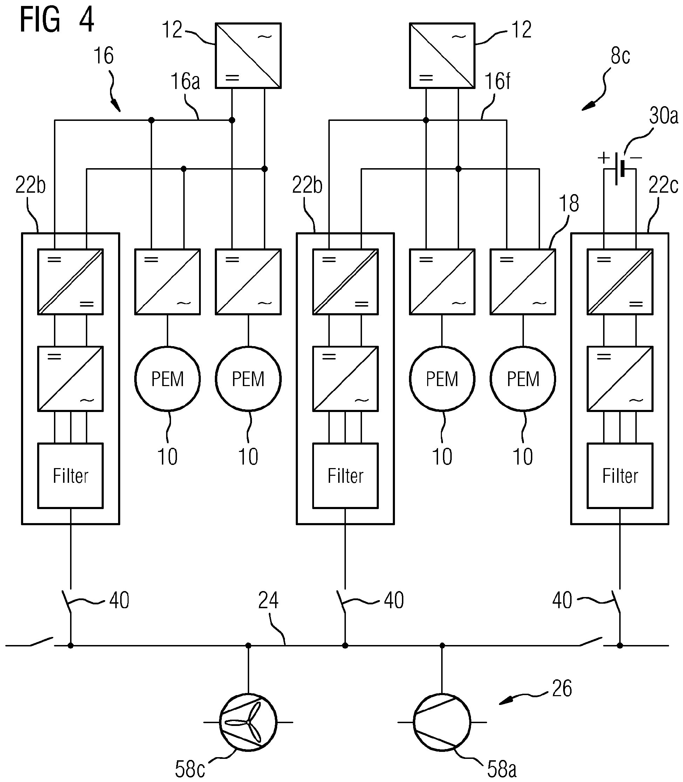

Ein weiteres Ausführungsbeispiel einer Stromversorgungseinrichtung 8c ist in FIG 4 dargestellt. Im Unterschied zu den vorherigen Ausführungsbeispielen ist eine der Energieversorgungseinheiten 22c über eine Gleichstromquelle 30a in Form einer Batterie mit Energie versorgt. Dieses Ausführungsbeispiel hat den Vorteil, dass die Wechselstrom-Zugsammelschiene 24 auch dann mit Betriebsenergie für zumindest die für die elektrodynamische Bremsung notwendigen Betriebsaggregate des Bremssystems 26 versorgt ist, wenn der gesamte Zwischenkreis 16 stromlos ist, beispielsweise weil keine Energie aus dem Bahnnetz abrufbar ist oder beide Eingangsstromrichter 12 defekt sind. Die Gleichstromquelle 30a ist zwischenkreisfrei, also unabhängig von einem Zwischenkreis 16 einsetzbar. Anstelle der Batterie kann auch eine Gleichstrom-Zugsammelschiene als Gleichstromquelle 30a verwendet werden. Diese wäre bei einem Ausfall des Zwischenkreises 16 mit zumindest einem Gleichstromspeicher in einem anderen Wagen zu betreiben oder an eine Sammelschiene eines anderen angetriebenen Wagens anzuhängen.

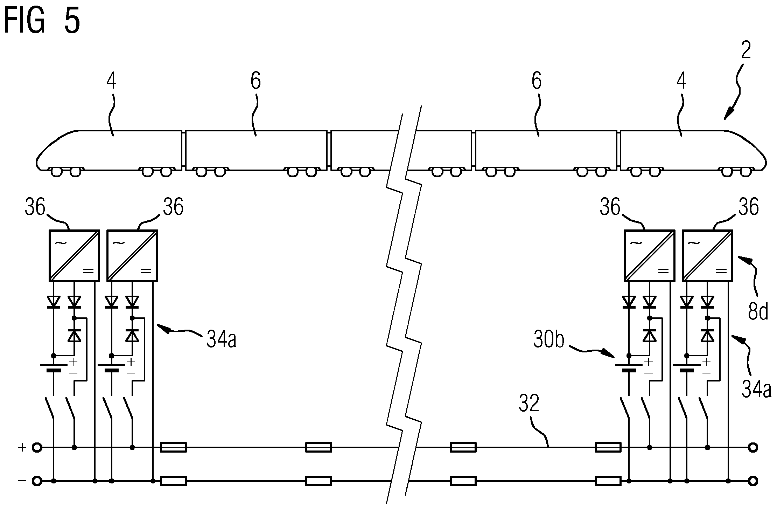

FIG 5 zeigt das Schienenfahrzeug 2 mit zwei angetriebenen Wagen 4 und mehreren nicht angetriebenen Wagen 6. Das Schienenfahrzeug 2 verfügt über eine Gleichstrom-Zugsammelschiene 32, die durch das gesamte Schienenfahrzeug 2, also alle Wagen 4, 6 hindurch verläuft. Die durch den Zug geführte und auch in FIG 1 dargestellte Gleichstrom-Zugsammelschiene 32 wird am vorderen Ende des Zuges und am hinteren Ende des Zuges durch zwei Energieversorgungseinheiten 34a mit Gleichstrom versorgt, die nicht dargestellte Betriebsaggregate der nicht angetriebenen Wagen 6 mit Betriebsstrom versorgt. Die Energieversorgungseinheiten 34a, die jeweils Teil einer Stromversorgungseinrichtung 8d sind, umfassen jeweils zwei gesteuerte Umrichter 36, die jeweils redundant Energie in die Gleichstrom-Zugsammelschiene 32 einspeisen. Die Leistung der gesteuerten Umrichter 36 ist so bemessen, dass alle Betriebsaggregate der nicht angetriebenen Wagen 6 mit Betriebsenergie versorgt werden können, wenn die Gleichstrom-Zugsammelschiene 32 durch zumindest zwei gesteuerte Umrichter 36 versorgt wird. Insbesondere ist die Leistung der gesteuerten Umrichter 36 ausreichend, um die Betriebsaggregate der nicht angetriebenen Wagen 6, die für eine Notbremsung benötigt werden, auch nur durch einen gesteuerten Umrichter 36 versorgen zu können.

Bei einer einfachen Zugtrennung wird die Gleichstrom-Zugsammelschiene 32 in zwei Teile zerrissen, die jedoch bei jeder möglichen Variation der einfachen Zugtrennung aus einer Energieversorgungseinheit 34a gespeist werden. Auf diese Weise bleiben die Bremsaggregate der nicht angetriebenen Wagen 6 auch bei einer einfachen Zugtrennung stets voll funktionsfähig.

Für den Fall, dass die gesteuerten Umrichter 36 eingangsseitig keine Energie bekommen, beispielsweise durch einen technischen Defekt des Schienenfahrzeugs 2, sind alle Energieversorgungseinheiten 34a mit zumindest zwei Gleichstromspeichern 30a ausgestattet, durch die zumindest die Bremsaggregate der nicht angetriebenen Wagen 6 mit ausreichend Betriebsenergie versorgt werden können. Hierbei ist jeder gesteuerte Umrichter 36 mit einem Gleichstromspeicher 30a verbunden, so dass jede der Energieversorgungseinheiten 34a zwei Segmente mit jeweils einem gesteuerten Umrichter 36 und einem Gleichstromspeicher 30a aufweist.

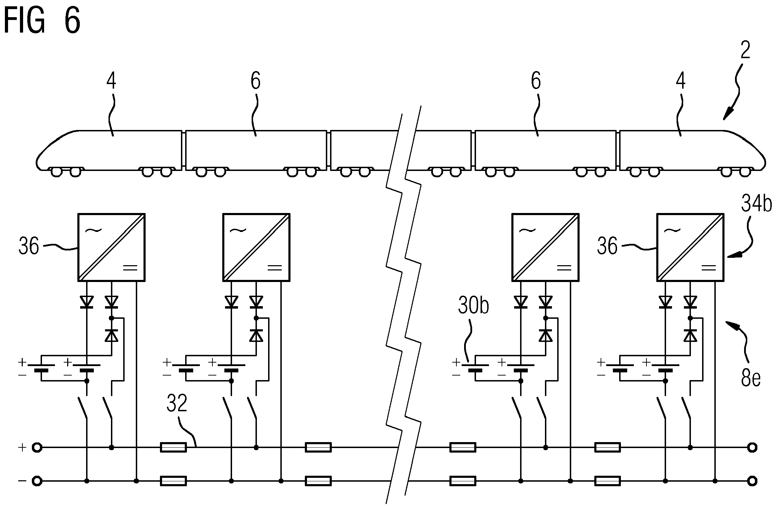

Bei dem in FIG 6 gezeigten Ausführungsbeispiel ist jeder nicht angetriebene Wagen 6 des Schienenfahrzeugs 2 mit einer Energieversorgungseinheit 34b versehen, wobei deren Leistung so bemessen sein sollte, dass sie zu zweit, insbesondere sogar alleine, alle an der Gleichstrom-Zugsammelschiene 32 angeschlossenen Betriebsaggregate des eigenen Wagens 4, 6 versorgen können. Vorteilhaft ist eine überschüssige Leistung, so dass die Gleichstrom-Zugsammelschiene 32 mehrfach redundant durch mehrere Energieversorgungseinheiten 34b mit Betriebsenergie versorgt werden kann.

Durch die Ausstattung eines jeden nicht angetriebenen Wagens 6 mit einer Energieversorgungseinheit 34b ist diese Energieversorgung der Bremsaggregate auch bei einer Mehrfachzugtrennung - unabhängig von dem Ort oder den Orten der Zugtrennung - in jedem Fall gewährleistet. Um auch bei einem Netzausfall oder einem Zwischenkreisausfall Betriebsenergie für Bremsaggregate zur Verfügung zu haben, ist jede Energieversorgungseinheit 34b mit zwei Gleichstromspeichern 30a ausgestattet, analog zu FIG 5, die entweder alleine oder gemeinsam die ausreichende Leistung für die für die Bremsung notwendigen Aggregate zur Verfügung stellen.

Die gesteuerten Umrichter 36 aus beiden Ausführungsbeispielen der Figuren 5 und 6 können eingangsseitig an die Wechselstrom-Zugsammelschiene 24 der Stromversorgungseinrichtung 8 angeschlossen sein. Ebenso ist es möglich, die Gleichstrom-Zugsammelschiene 32 direkt aus dem Zwischenkreis 16 zu speisen und einen entsprechenden Stromrichter zwischen den Zwischenkreis 16 und die Gleichstrom-Zugsammelschiene 32 zu schalten. Dieser wäre dann zweckmäßigerweise ein Tiefsetzsteller.

Die Stromversorgungseinrichtungen 8a, 8b und 8c können ohne weiteres jeweils mit der Stromversorgungseinrichtung 8d oder 8e kombiniert werden, so dass eine Stromversorgungseinrichtung 8 mit Energieversorgungseinheiten 22 und Energieversorgungseinheiten 34 vorhanden ist.

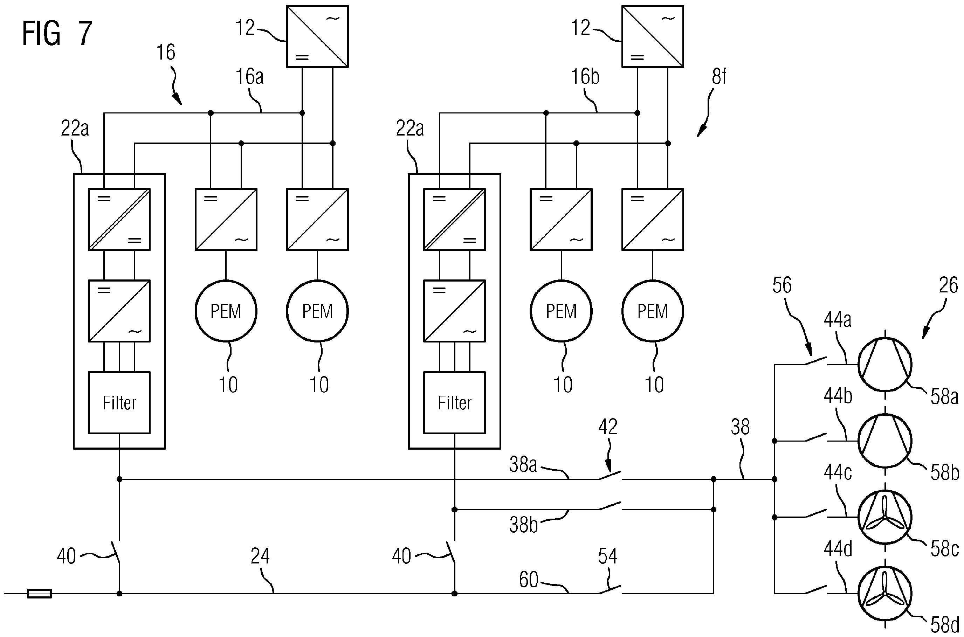

Ein weiteres Ausführungsbeispiel ist in FIG 7 schematisch dargestellt. Im Unterschied zu den vorherigen Ausführungsbeispielen verfügt die Stromversorgungseinrichtung 8f über ein an die Betriebsaggregate 58a-d des Bremssystems 26 angeschlossenes Wechselstrom-Leitungssystem 38, das eine oder mehrere Wechselstrom-Leitungen 38a, 38b aufweisen kann. Das Leitungssystem 38 aus FIG 7 umfasst zwei Wechselstrom-Leitungen 38a, 38b in Parallelschaltung, die jeweils eine der beiden Energieversorgungseinheiten 22a an die Betriebsaggregate 58a-d des Bremssystem 26 anbinden.

In jeder der beiden Wechselstrom-Leitungen 38a, 38b ist ein Schaltmittel 42 vorhanden. Von der Wechselstrom-Zugsammelschiene 24, die durch den gesamten Zug verläuft, zweigt eine Wechselstrom-Zweigleitung 60 ab. Diese ist über ein Schaltmittel 54 an das Wechselstrom-Leitungssystem 38 angekoppelt. Die beiden Energieversorgungseinheiten 22a sind über ein Schaltmittel 40 jeweils einzeln verbind- und trennbar an die Wechselstrom-Zugsammelschiene 24 angeschlossen. Die Anbindung des Wechselstrom-Leitungssystems 38 an die Energieversorgungseinheiten 22a verbleibt aufgrund der baulichen Anordnung durch das Schaltmittels 40 unbeeinflusst. Jedes einzelne der Betriebsaggregate 58a-d des Bremssystems 26 verfügt über eine einzige Wechselstrom-Zuleitung 44a-d, die über ein Schaltmittel 56 mit dem Wechselstrom-Leitungssystem 38 verbunden ist. Die Betriebsaggregate 58a-d des Bremssystems 26 sind redundant ausgeführt, und es existieren deshalb zwei Kühlmittelpumpen 58a und 58b und zwei Lüfter 58c und 58d.

Fällt eine der Energieversorgungseinheiten 22a durch einen Defekt aus, so trennt die Steuereinheit 20 die betreffende Energieversorgungseinheit 22a von den Betriebsaggregaten 58a-d des Bremssystems 26. Dies erfolgt über die Betätigung des Schaltmittels 42 in den Wechselstrom-Leitungen 38a und 38b. Dabei wird die an die defekte Energieversorgungseinheit 22a gekoppelte Wechselstrom-Leitung 38a oder 38b von den Betriebsaggregaten 58a-d getrennt. Die Wechselstrom-Leitung 38a oder 38b der intakten Energieversorgungseinheit 22a wird oder bleibt dabei durch das Schaltmittel 42 mit den Betriebsaggregate 58a-d verbunden. So wird sichergestellt, dass die Energieversorgung des Bremssystems 26 bei einem Ausfall einer der beiden Energieversorgungseinheiten 22a aufrecht erhalten wird. Zu diesem Zweck ist die Nennleistung der in FIG 7 dargestellten Energieversorgungseinheiten 22a mit jeweils a/2 kVA, also der Hälfte der Hauptnennleistung von a kVA, identisch und so bemessen, dass das Bremssystem 26 von nur einer einzigen Energieversorgungseinheit 22a auch im Normalbetrieb ausreichend mit Betriebsenergie versorgt werden kann.

Fallen beide Energieversorgungseinheiten 22a aus, so kann es sein, dass über die Wechselstrom-Zugsammelschiene 24, die durch den ganzen Zug verläuft, Strom zumindest für einen Notbetrieb von einem anderen Triebwagen zur Verfügung steht. Um diesen zu nutzen, wird das Schaltmittel 54 geschlossen und die Schaltmittel 40 und 42 geöffnet. Durch die Betätigung der Schaltmittel 40 und 42 werden die Energieversorgungseinheiten 22a von der Wechselstrom-Zugsammelschiene 24 und der Wechselstrom-Leitung 38 getrennt. Durch die Betätigung des Schaltmittels 54 wird eine Verbindung zwischen der Wechselstrom-Zugsammelschiene 24 über die Wechselstrom-Zweigleitung 60 mit der Wechselstrom-Leitung 38 hergestellt.

Eine identisch wirkende, baulich alternative Anordnung kann anstatt der Wechselstrom-Zweigleitung 60 und des Schaltmittels 54 zwei zusätzliche Schaltmittel vorsehen. Diese Schaltmittel können jeweils zwischen der betreffenden Energieversorgungseinheit 22a und der Anbindung der Wechselstrom-Leitungen 38a und 38b an einer Verbindungsleitung von der betreffenden Energieversorgungseinheit 22a mit der Zugsammelschiene 24 angeordnet sein. Fallen beide Energieversorgungseinheiten 22a aus, werden die zusätzlichen Schaltmittel geöffnet und das Schaltmittel 40 geschlossen, so dass die Speisung der Betriebsaggregate 58a-d des Bremssystems 26 von der Wechselstrom-Zugsammelschiene 24 über eine oder beide Wechselstrom-Leitungen 38a oder/und 38b erfolgen kann.

Ein defektes Betriebsaggregat 58a-d wird durch das Schaltmittel 56 von der Wechselstrom-Leitung 38 getrennt. Dadurch wird verhindert, dass das Nennpotenzial der Wechselstrom-Zugsammelschiene 24 oder der Wechselstrom-Leitung 38 auf ein deutliches geringeres und zur Versorgung des Bremssystems 26 nicht ausreichendes Potenzial gezogen wird.

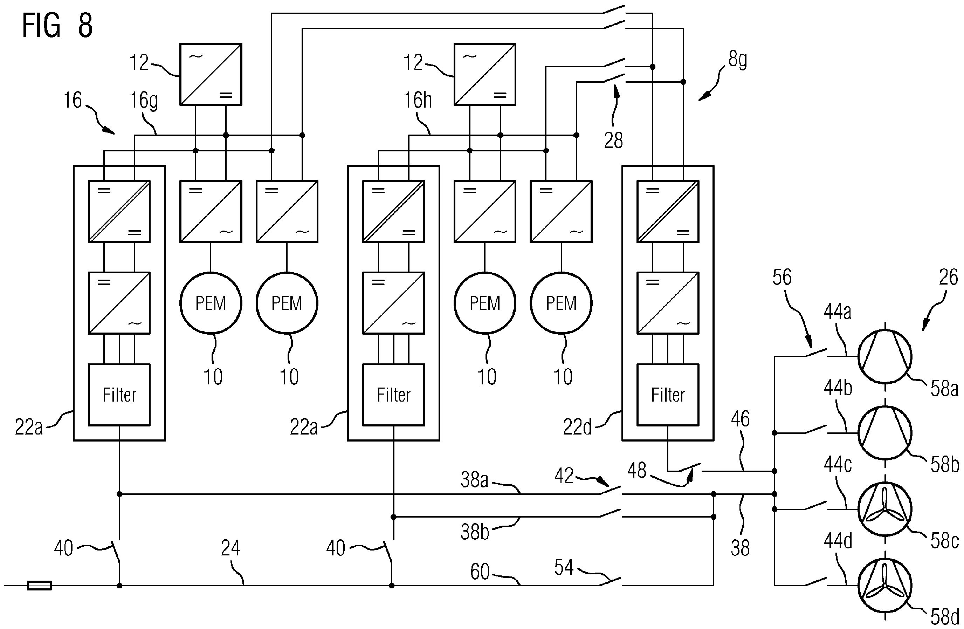

FIG 8 zeigt ein weiteres Ausführungsbeispiel einer Stromversorgungseinrichtung 8g. Als Variation zu der in FIG 7 dargestellten Ausführungsform verfügt die Stromversorgungseinrichtung 8g über eine weitere Energieversorgungseinheit 22d. Die Energieversorgungseinheit 22d ist zusätzlich zu den beiden Energieversorgungseinheiten 22a vorhanden und über eine weitere Wechselstrom-Leitung 46 an die Betriebsaggregate 58a-d des Bremssystems 26 angeschlossen. Weiterhin ist ein Schaltmittel 48 zum Verbinden und Trennen der Ankopplung zwischen der Energieversorgungseinheit 22d und den Betriebsaggregaten 58a-d des Bremssystems 26 auf der Wechselstrom-Leitung 46 angeordnet.

Wie in den vorhergehenden Ausführungsbeispielen sind auch hier zuvor beschriebene Merkmale übernommen. So ist beispielsweise die Anordnung der Energieversorgungseinheiten 22a, der Wechselstrom-Zugsammelschiene 24, der Wechselstrom-Leitungen 38 und der Wechselstrom-Zweigleitung 60 in ihrer Wirkweise auf die Versorgung der Betriebsaggregate 58a-d des Bremssystems 26 analog zu der in FIG 7 dargestellten Ausführungsvariante gestaltet. Gleiches gilt für die Schaltmittel 40, 42 und 54.

Zwei Zwischenkreissegmente 16g und 16h sind zwischen den Eingangsstromrichtern 12 und den Energieversorgungseinheiten 22a angeordnet. Die zwei Eingangsphasen des Wechselrichters der Energieversorgungseinheit 22d sind über ein Schaltmittel 28 mit den Gleichstromphasen der Eingangsstromrichter 12 verbunden, wodurch mehrere Betriebsmodi der Stromversorgungseinrichtung 8g geschaltet werden können. Das Schaltmittel 28 besitzt auf jeder der zwei Gleichstromphasen der zwei Eingangsstromrichter 12 jeweils einen Schalter, so dass vier betriebswesentliche Schaltzustände schaltbar sind:
Sind alle Schalter des Schaltmittels 28 geschlossen, so erfolgt die Speisung der Energieversorgungseinheit 22d gemeinsam von beiden Eingangsstromrichtern 12.

Sind hingegen alle Schalter des Schaltmittels 28 geöffnet, so ist die Energieversorgungseinheit 22d von beiden Eingangsstromrichtern 12 getrennt und außer Betrieb.

Sind die beiden oberen Schalter des Schaltmittels 28 geschlossen und die unteren Schalter geöffnet, so speist der linke Eingangsstromrichter 12 die Energieversorgungseinheit 22d zusätzlich zu dem Segment 16g des Zwischenkreises 16.

Sind die beiden unteren Schalter des Schaltmittels 28 geschlossen und die oberen Schalter geöffnet, so speist der rechte Eingangsstromrichter 12 die Energieversorgungseinheit 22d zusätzlich zu dem Segment 16h des Zwischenkreises 16.

Treten Defekte in einem der beiden Eingangsstromrichter 12 auf, so schaltet die Steuereinheit 20 die Schalter des Schaltmittels 28 in der Art, dass die Eingänge der Energieversorgungseinheit 22d mit dem Plus- und Minuspol des intakten Eingangsstromrichters 12 verbunden und von denen des defekten Eingangsstromrichters 12 getrennt werden.

Fallen beide Eingangsstromrichter 12 durch Defekte oder systematische Softwarefehler aus, sind sämtliche Energieversorgungseinheiten 22a und 22d außer Betrieb und die Steuereinheit 20 öffnet die Schaltmittel 40, 42, 48 und schließt das Schaltmittel 54. So wird gewährleistet, dass die Betriebsaggregate 58a-d von der Wechselstrom-Zugsammelschiene 24 mit Betriebsenergie versorgt werden. Die Wechselstrom-Zugsammelschiene 24 verläuft durch den gesamten Zug und ist deshalb auch bei einem Defekt der Energieversorgungseinheiten 22a und 22d und/oder der Eingangsstromrichter 12 dazu vorgesehen, die Energieversorgung der Betriebsaggregate 58a-d des Bremssystems 26 aufrecht zu erhalten.

Ein Ausfall der Wechselstrom-Zugsammelschiene 24 kann insbesondere im ungewollten Fall einer einfachen oder doppelten Zugtrennung auftreten. Die für eine elektrodynamische Notbremsung notwendige sichere Energieversorgung der Betriebsaggregate 58a-d des Bremssystems 26 ist auch bei gleichzeitigem Ausfall der Energieversorgungseinrichtungen 22a und der Wechselstrom-Zugsammelschiene 24 gewährleistet. Dies gilt, sofern sich mindestens ein Eingangsstromrichter 12 und die Stromversorgungseinrichtung 22d in funktionstüchtigem Zustand befinden.

Zu diesem Zweck ist die Nennleistung der in FIG 8 dargestellten Energieversorgungseinheiten 22a mit jeweils a/2 kVA identisch und so bemessen, dass die Betriebsaggregate 58a-d des Bremssystem 26 von nur einer einzigen Energieversorgungseinheit 22a auch im Normalbetrieb ausreichend mit Betriebsenergie versorgt werden kann. Die Nennleistung der Energieversorgungseinheit 22d kann durch die baulich gegebene Redundanz der Energieversorgung allein auf den Energiebedarf der Betriebsaggregate 58a-d des Bremssystems 26 im Notbetrieb ausgelegt und damit wesentlich geringer, z.B. auf a/10 kVA, bemessen werden.

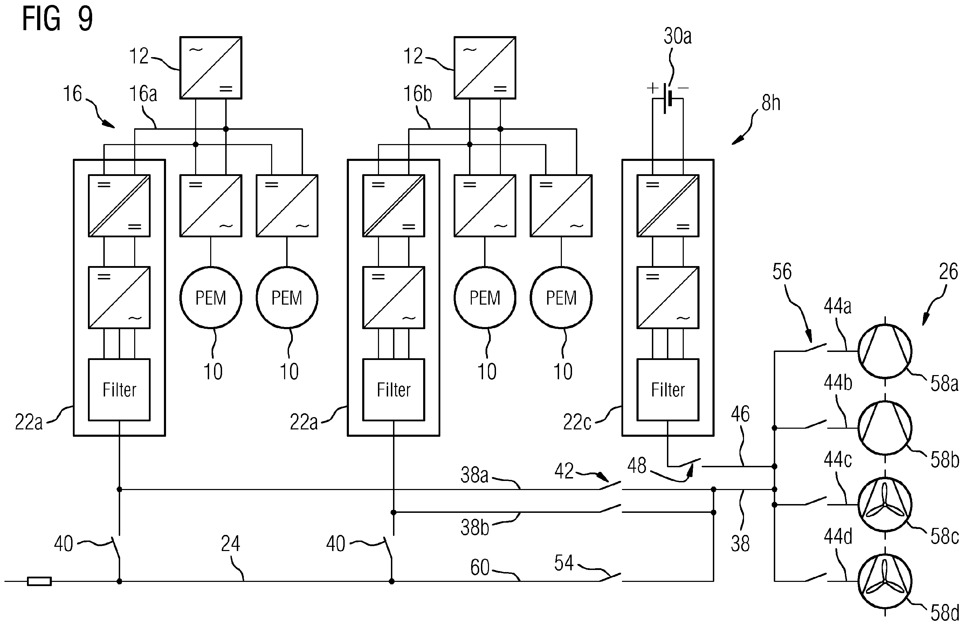

Ein weiteres Ausführungsbeispiel einer Stromversorgungseinrichtung 8h ist in FIG 9 schematisch dargestellt.

Die Anordnung der Energieversorgungseinheiten 22a, der Wechselstrom-Zugsammelschiene 24, der Wechselstrom-Leitungen 38 und der Wechselstrom-Zweigleitung 60 ist in ihrer Wirkweise auf die Versorgung des Bremssystems 26 analog zu der in FIG 7 dargestellten Ausführungsvariante gestaltet. Gleiches gilt für die Schaltmittel 40, 42 und 54.

Zusätzlich ist eine Gleichstromquelle 30a zur Speisung einer weiteren Energieversorgungseinheit 22c angeordnet. Die Energieversorgungseinheit 22c ist über eine Wechselstrom-Leitung 46 und ein Schaltmittel 48 verbind- und trennbar an die Betriebsaggregate 58a-d des Bremssystems 26 angeschlossen.

Die Gleichstromquelle 30a ist zwischenkreisfrei, also zumindest temporär unabhängig von den aus den Eingangstromrichtern 12 gespeisten Segmenten 16a und 16b des Zwischenkreises 16 einsetzbar. Die Gleichstromquelle 30a kann beispielsweise als Batterie ausgeführt sein. In einer alternativen Ausführungsform kann die Gleichstromquelle 30a, z.B. zu dem Zweck ihrer elektrischen Ladung oder Wiederaufladung, an die Gleichstrom-Zugsammelschiene 32 angeschlossen sein.

Das in FIG 9 dargestellte Ausführungsbeispiel hat den Vorteil, dass die sichere Energieversorgung der Betriebsaggregate 58a-d auch im Fall eines Defektes beider Eingangsstromrichter 12 und bei gleichzeitigem Ausfall der Wechselstrom-Zugsammelschiene 24 gewährleistet ist. Die Steuereinheit 20 schaltet in einem solchen Störfall die Schaltmittel so, dass das Schaltmittel 48 geschlossen, die Schaltmittel 40, 42 und 52 geöffnet werden. Das Bremssystem wird dann allein durch die Energieversorgungseinheit 22c mit Betriebsenergie versorgt. Die Nennleistung der Energieversorgungseinheit 22c kann dabei so gewählt sein, dass sie zu einer Versorgung des Bremssystems 26 im Störfall hinreichend ist und z.B. auf a/10 kVA beschränkt sein. Die Nennleistung der Energieversorgungseinheiten 22a kann z.B. auf a/2 kVA ausgeführt sein, so dass eine sichere Versorgung der Wechselstrom-Zugsammelschiene 24 gewährleistet ist.

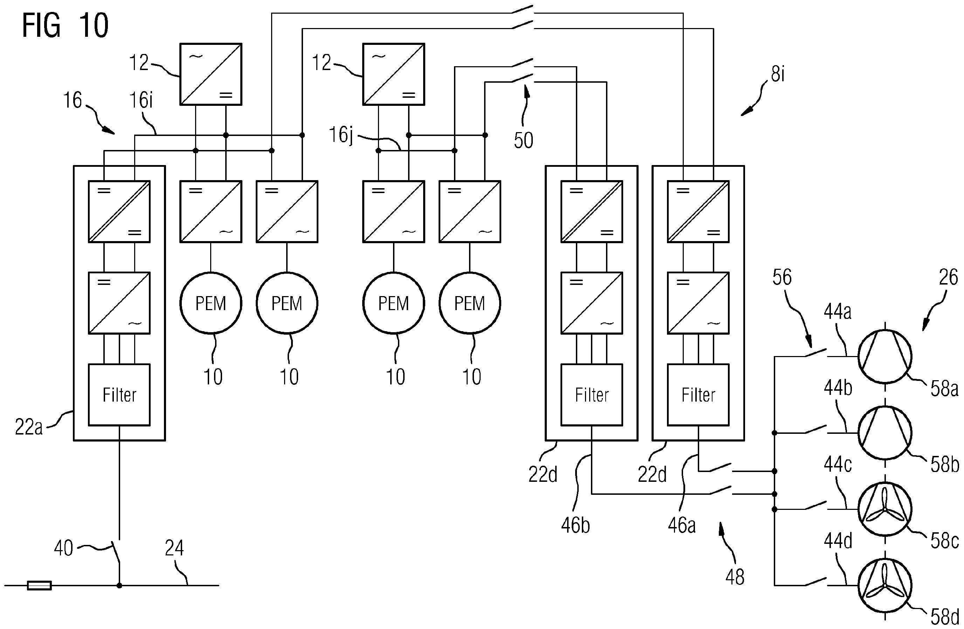

FIG 10 zeigt ein weiteres Ausführungsbeispiel einer Stromversorgungseinrichtung 8i mit drei redundanten Energieversorgungseinheiten 22a und 22d. Dabei ist die Energieversorgungseinheit 22a an einen Eingangsstromrichter 12, der auch einen Zwischenkreis 16i speist, angeschlossen und zur Versorgung der Wechselstrom-Zugsammelschiene 24 ausgeführt. Ein Schaltmittel 40 ist zum Trennen und Verbinden der Stromversorgungseinheit 22a von bzw. mit der Wechselstrom-Zugsammelschiene 24 angeordnet. Ein weiterer Eingangsstromrichter 12 ist an einen Zwischenkreis 16j angeschlossen.

Die zwei weiteren Energieversorgungseinheiten 22d sind an die Betriebsaggregate 58a-58d des Bremssystems 26 zu dessen Versorgung mit Betriebsenergie über Wechselstrom-Leitungen 46a und 46b angekoppelt. Dabei ist jede der Energieversorgungseinheiten 22d an eine einzige der Wechselstrom-Leitungen 46a und 46b angeschlossen. Auch ist jede der Wechselstrom-Leitungen 46a und 46b nur mit einer einzigen der Energieversorgungseinheiten 22d verbunden. Weiterhin ist ein Schaltmittel 48 zum Verbinden und Trennen der Ankopplung zwischen den Energieversorgungseinheiten 22d und den Betriebsaggregaten 58a-d des Bremssystems 26 auf jeder der Wechselstrom-Leitungen 46a und 46b angeordnet.

Die zwei Energieversorgungseinheiten 22d sind über ein Schaltmittel 50 trenn- und verbindbar an die zwei Eingangsstromrichter 12 angeschlossen. Dabei ist die bauliche Anordnung so vorgenommen, dass jeweils eine der Energieversorgungseinheiten 22d von einem einzigen der Eingangsstromrichter 12 gespeist wird. Auch speist jeder der Eingangsstromrichter 12 nur eine einzige der Energieversorgungseinheiten 22d.

Durch diese Art der Verbindung zwischen den Eingangsstromrichtern 12 und den Energieversorgungseinheiten 22d ergeben sich drei betriebswesentliche Schaltzustände des Schaltmittels 50:
Sind die beiden oberen Schalter des Schaltmittels 50 geschlossen und die unteren Schalter geöffnet, so speist der linke Eingangsstromrichter 12 die Energieversorgungseinheit 22d zusätzlich zu dem Segment 16i des Zwischenkreises 16.

Sind die beiden unteren Schalter des Schaltmittels 50 geschlossen und die oberen Schalter geöffnet, so speist der rechte Eingangsstromrichter 12 die Energieversorgungseinheit 22d zusätzlich zu dem Segment 16j des Zwischenkreises 16.

Sind alle Schalter des Schaltmittels 50 geschlossen, so erfolgt die Speisung beider Energieversorgungseinheiten 22d gemeinsam von beiden Eingangsstromrichtern 12.

Treten Defekte in einem der beiden Eingangsstromrichter 12 auf, so schaltet die Steuereinheit 20 die Schalter des Schaltmittels 50 in der Art, dass die Eingänge der Energieversorgungseinheiten 22d mit dem Plus- und Minuspol des intakten Eingangsstromrichters 12 verbunden und von denen des defekten Eingangsstromrichters 12 getrennt werden. Zu diesem Zweck sind die Nennleistungen der beiden Energieversorgungseinheiten 22d jeweils zu einer ausreichenden Versorgung der Betriebsaggregate 58a-d des Bremssystems 26 im Normalbetrieb bemessen und z.B. mit jeweils a/4 kVA vorgesehen. Die Nennleistung der Energieversorgungseinheit 22a kann z.B. auf a kVA ausgeführt sein, so dass eine sichere Versorgung der Wechselstrom-Zugsammelschiene 24 gewährleistet ist.

Um die Sicherheit der Stromversorgung noch weiter zu erhöhen, kann in einer alternativen Ausführungsform jede der Energieversorgungseinheiten 22d mit jedem der Eingangsstromrichter 12 verbunden sein.

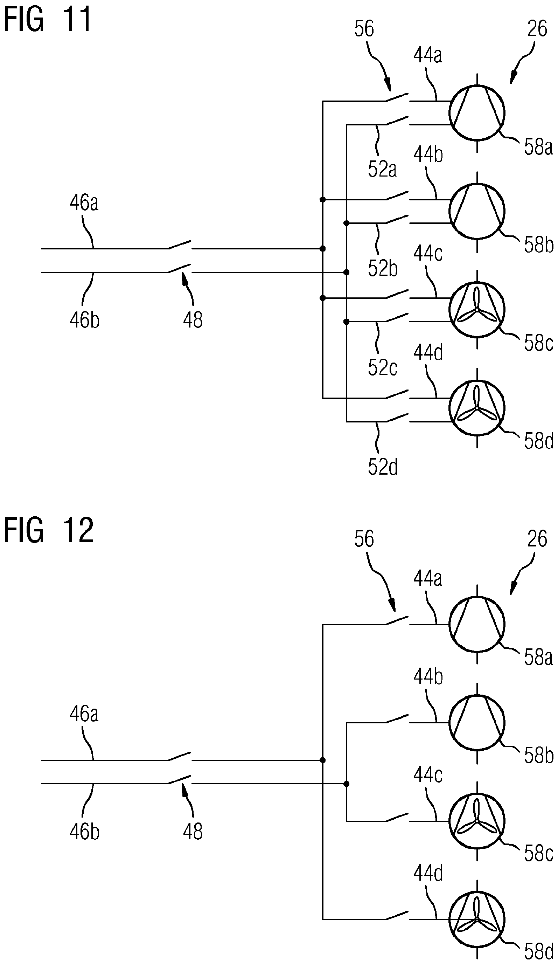

Eine Darstellung einer alternativen, redundanten Stromversorgung der Betriebsaggregate 58a-d, die auch bei den Stromversorgungseinrichtungen 8 der FIGen 7 bis 10 anwendbar ist, ist in FIG 11 dargestellt.

Jedes einzelne der Betriebsaggregate 58a-d ist über jeweils zwei Wechselstrom-Zuleitungen 44 und 52 mit den Wechselstrom-Leitungen 46a und 46b verbunden. Dabei ist jede der Wechselstrom-Zuleitungen 44 an eine und nur eine der Wechselstrom-Leitungen 46a oder 46b angeschlossen. Auch ist jede der Wechselstrom-Zuleitungen 52 an eine und nur eine der Wechselstrom-Leitungen 46a oder 46b angeschlossen. Darüber hinaus sind die Wechselstrom-Zuleitungen 44 und 52 an jeweils eine andere Wechselstrom-Leitung 46a oder 46b angeschlossen.

Die dadurch gewonnene Unabhängigkeit, Rückwirkungsfreiheit und Redundanz erhöht die Verfügbarkeit der Energieversorgung im Vergleich zu der in den FIGn 7 bis FIG 10 ausgeführten Anbindung der Betriebsaggregate 58a-d über jeweils eine einzige Wechselstrom-Zuleitung, die an jede der Wechselstrom-Leitungen angeschlossen ist.

Alternativ kann die Erfindung auch dadurch weitergebildet werden, dass mehr als die zwei Wechselstrom-Zuleitungen 44 und 52 pro Betriebsaggregat 58 und mehr als die zwei Wechselstrom-Leitungen 46a und 46b zur Anbindung vorgesehen werden.

FIG 12 zeigt eine weitere Ausführungsvariante der Stromversorgungseinrichtung 8. In diesem Ausführungsbeispiel sind die Betriebsaggregate 58a-d des Bremssystems 26 in zwei Aggregategruppen, also Untermengen aus der Gesamtheit aller Betriebsaggregate 58, aufgeteilt. Jede der zwei Untermengen mit den Elementen 58a und 58d beziehungsweise 58b und 58c ist an eine und nur an eine der Wechselstrom-Leitungen 46a oder 46b angeschlossen. Auch ist jede der Wechselstrom-Leitungen 46a und 46b nur an eine einzige der Aggregategruppen angeschlossen. Durch diese Art der Anbindung wird, trotz der Beschränkung auf eine einzige Wechselstrom-Zuleitung 44a-d je Betriebsaggregat 58a-d, eine erhöhte Verfügbarkeit der Energieversorgung hergestellt. Fällt eine der Wechselstrom-Leitung 46a oder 46b durch einen Defekt aus, so kann die Energieversorgung der Betriebsaggregate 58a-d des Bremssystems 26 durch die andere aufrecht erhalten werden.

## Patentansprüche

1. Stromversorgungseinrichtung (8, 8a-i) für ein Schienenfahrzeug (2), das zumindest einen angetriebenen Wagen (4) umfasst, mit
- einem Zwischenkreis (16),
- einem Bremssystem (26),
- einem Energieversorgungssystem wobei das Energieversorgungssystem zumindest zwei am Zwischenkreis (16) angeordnete Energieversorgungseinheiten (22a-c) für den angetriebenen Wagen (4) enthält zur redundanten Energieversorgung des Bremssystems (26),
- zwei Eingangsstromrichtern (12) für den angetriebenen Wagen (4) zur jeweiligen Versorgung des gesamten Zwischenkreises (16) mit Energie, und
- einem Schaltmittel (28) zum Verbinden beider Eingangsstromrichter (12) mit zumindest einer der Energieversorgungseinheiten (22b, 22c) zu deren Energieversorgung, wobei das Schaltmittel (28) zum Auftrennen des Zwischenkreises (16) in zwei Segmente (16c, 16d), die voneinander getrennt sind, von jeweils einem Eingangsstromrichter (12) gespeist werden und jeweils eine Energieversorgungseinheit (22b, 22c) aufweisen, vorgesehen ist,
**dadurch gekennzeichnet, dass**
das Schaltmittel (28) ferner zum Verbinden beider Energieversorgungseinheiten (22b, 22c) mit einem der beiden Eingangsstromrichter (12) bei ansonsten getrennten Segmenten (16c, 16d) sowie zum Trennen einer der Energieversorgungseinheiten (22c) von den beiden Eingangsstromrichtern (12) vorgesehen ist.

2. Stromversorgungseinrichtung (8, 8a-e) nach Anspruch 1, **gekennzeichnet durch** eine Wechselstrom-Zugsammelschiene (24), zum Versorgen des Bremssystems mit Betriebsenergie, wobei die zwei Energieversorgungseinheiten (22a-c) zur redundanten Energieversorgung der Wechselstrom-Zugsammelschiene (24) ausgeführt sind.

3. Stromversorgungseinrichtung (8, 8b) nach Anspruch 1 oder 2,
**dadurch gekennzeichnet, dass** die beiden Energieversorgungseinheiten (22a-c) jeweils einem eigenen Segment (16a-f) des Zwischenkreises (16) zugeordnet sind und die beiden Segmente (16a-f) voneinander getrennt sind und über die Energieversorgungseinheiten (22a-c) zur redundanten Energieversorgung der Wechselstrom-Zugsammelschiene (24) dienen.

4. Stromversorgungseinrichtung (8, 8b-e) nach Anspruch 1, **dadurch gekennzeichnet, dass** die Energieversorgungseinheit (22c) mit der geringeren Leistung mit zumindest zwei Eingangsstromrichtern (12) verbunden ist und die stärkere Energieversorgungseinheit (22b) im regulären Betrieb zur alleinigen Energieversorgung der Wechselstrom-Sammelschiene ausgelegt und vorbereitet ist.

5. Stromversorgungseinrichtung (8, 8a-e) nach einem der vorhergehenden Ansprüche,
**gekennzeichnet durch** einen Gleichstromspeicher (30a), der mit zumindest einer der Energieversorgungseinheiten (22c) verbunden und dazu ausgelegt ist, die Wechselstrom-Zugsammelschiene (24) über die Energieversorgungseinheit (22c) mit Energie zu versorgen.

6. Stromversorgungseinrichtung (8, 8a-e) nach einem der vorhergehenden Ansprüche,
**gekennzeichnet durch** eine Gleichstrom-Zugsammelschiene (32), wobei das Energieversorgungssystem zumindest zwei Energieversorgungseinheiten (34) zur redundanten Energieversorgung der Gleichstrom-Zugsammelschiene (32) enthält.

7. Stromversorgungseinrichtung (8, 8a-e) nach Anspruch 6, **gekennzeichnet durch** eine zu den Energieversorgungseinheiten (34) zusätzliche Gleichstromquelle, die zum Speisen der Gleichstrom-Zugsammelschiene (32) vorbereitet ist.

8. Stromversorgungseinrichtung (8, 8a-e) nach Anspruch 6 oder 7,
**dadurch gekennzeichnet, dass** die Gleichstrom-Zugsammelschiene (32) speisende Energieversorgungseinheiten (34) jeweils zumindest zwei Gleichstromspeicher (30b) aufweisen.

9. Stromversorgungseinrichtung (8, 8a-i) nach einem der vorhergehenden Ansprüche,
**gekennzeichnet durch** eine Wechselstrom-Zugsammelschiene (24), an die die zwei Energieversorgungseinheiten (22a) per Parallelschaltung angeschlossen sind, und eine Anzahl von an das Bremssystem (26) angeschlossenen Wechselstrom-Leitungen (38, 38a-b) zur Versorgung des Bremssystems (26) mit Betriebsenergie, an die die zwei Energieversorgungseinheiten (22a) per Parallelschaltung angeschlossen sind, und ein Schaltmittel (54) zum Verbinden und Trennen der Anzahl der Wechselstrom-Leitungen (38, 38a-b) mit bzw. von der Wechselstrom-Zugsammelschiene (24).

10. Stromversorgungseinrichtung (8, 8a-i) nach Anspruch 9, **dadurch gekennzeichnet, dass** beide Energieversorgungseinheiten (22a) jeweils an einen eigenen Eingangsstromrichter angeschlossen sind und eine weitere Energieversorgungseinheit (22d) vorhanden ist, die an einen der Eingangsstromrichter (12) einer der anderen Energieversorgungseinheiten (22a, 22b) angeschlossen ist, und über eine weitere Wechselstrom-Leitung (46) kopplungsfrei von der Wechselstrom-Zugsammelschiene (24) mit einem Schaltmittel(48) an das Bremssystem angebunden und für dessen redundante Energieversorgung ausgelegt ist.

11. Stromversorgungseinrichtung (8, 8a-i) nach Anspruch 9 oder 10,
**dadurch gekennzeichnet, dass** eine weitere Energieversorgungseinheit (22c) aus einem zwischenkreisfreien Gleichstromspeicher (30a) gespeist wird und über eine weitere Wechselstrom-Leitung (46) kopplungsfrei von der Wechselstrom-Zugsammelschiene (24) mit einem Schaltmittel (48) an das Bremssystem angebunden und für dessen redundante Energieversorgung ausgelegt ist.

12. Stromversorgungseinrichtung (8, 8f-i) nach einem der vorhergehenden Ansprüche,
**gekennzeichnet durch** mehrere an das Bremssystem (26) angeschlossenen Wechselstrom-Leitungen (38, 38a-b) zur Versorgung des Bremssystems (26) mit Betriebsenergie, an die die zwei Energieversorgungseinheiten (22a) per Parallelschaltung angeschlossen sind, wobei das Bremssystem (26) mehrere Betriebsaggregate (58a-d) aufweist, die jeweils über mehrere Wechselstrom-Zuleitungen (44, 52) verfügen, die eine Anbindung der Betriebsaggregate (58a-d) an die Wechselstrom-Leitungen (38ab, 46a-b) herstellen, wobei die Anzahl der Wechselstrom-Zuleitungen der Anzahl der Wechselstrom-Leitungen entspricht.

13. Stromversorgungseinrichtung (8, 8f-i) nach einem der vorhergehenden Ansprüche,
**gekennzeichnet durch** mehrere an das Bremssystem (26) angeschlossenen Wechselstrom-Leitungen (38, 38a-b) zur Versorgung des Bremssystems (26) mit Betriebsenergie, wobei das Bremssystem (26) mehrere Betriebsaggregate (58a-d) aufweist, die jeweils redundant vorhanden und in Untermengen aufgeteilt sind und jede Untermenge und jedes Betriebsaggregat aus jeweils nur einer der Wechselstrom-Leitungen gespeist werden.

## Claims

1. Power supply device (8, 8a-i) for a rail vehicle (2), which comprises at least one driven car (4), comprising
- a DC link (16),
- a braking system (26),
- an energy supply system wherein the energy supply system contains at least two energy supply units (22a-c) arranged on the DC link (16) for the driven car (4) for redundant energy supply to the braking system (26),
- two input power converters (12) for the driven car (4) for respectively supplying energy to the entire DC link (16), and
- a switching means (28) for connecting the two input power converters (12) to at least one of the energy supply units (22b, 22c) for the supply of energy thereto, wherein the switching means (28) is provided for splitting the DC link (16) into two segments (16c, 16d), which are disconnected from one another, are each fed by an input power converter (12) and each have an energy supply unit (22b, 22c),
**characterized in that**
the switching means (28) is furthermore provided for connecting the two energy supply units (22b, 22c) to one of the two input power converters (12) when the segments (16c, 16d) are otherwise disconnected and also for separating one of the energy supply units (22c) from the two input power converters (12).

2. Power supply device (8, 8a-e) according to Claim 1, **characterized by** an AC train busbar (24) for supplying operating energy to the braking system, wherein the two energy supply units (22a-c) are designed for redundant energy supply to the AC train busbar (24).

3. Power supply device (8, 8b) according to Claim 1 or 2, **characterized in that** the two energy supply units (22a-c) are each assigned to a dedicated segment (16a-f) of the DC link (16), and the two segments (16a-f) are disconnected from one another and are used, via the energy supply units (22a-c) for redundant energy supply to the AC train busbar (24).

4. Power supply device (8, 8b-e) according to Claim 1, **characterized in that** the energy supply unit (22c) with the lower power is connected to at least two input power converters (12) and the more powerful energy supply unit (22b), during regular operation, is designed and conditioned only for supplying energy to the AC busbar.

5. Power supply device (8, 8a-e) according to one of the preceding claims,
**characterized by** a DC store (30a), which is connected to at least one of the energy supply units (22c) and is designed to supply energy to the AC train busbar (24) via the energy supply unit (22c).

6. Power supply device (8, 8a-e) according to one of the preceding claims,
**characterized by** a DC train busbar (32), wherein the energy supply system contains at least two energy supply units (34) for redundant energy supply to the DC train busbar (32).

7. Power supply device (8, 8a-e) according to Claim 6, **characterized by** a DC source, in addition to the energy supply units (34), which is conditioned for feeding the DC train busbar (32).

8. Power supply device (8, 8a-e) according to Claim 6 or 7, **characterized in that** the energy supply units (34) feeding the DC train busbar (32) each have at least two DC stores (30b).

9. Power supply device (8, 8a-i) according to one of the preceding claims,
**characterized by** an AC train busbar (24), to which the two energy supply units (22a) are connected by means of a parallel circuit, and a number of AC lines (38, 38a-b) connected to the braking system (26) for supplying operating energy to the braking system (26), to which AC lines the two energy supply units (22a) are connected by means of a parallel circuit, and a switching means (54) for connecting and disconnecting the number of AC lines (38, 38a-b) to or from the AC train busbar (24) .

10. Power supply device (8, 8a-i) according to Claim 9, **characterized in that** both energy supply units (22a) are each connected to a dedicated input power converter and a further energy supply unit (22d) is provided, which is connected to one of the input power converters (12) of one of the other energy supply units (22a, 22b), and is connected to the braking system via a further AC line (46) without any coupling to the AC train busbar (24) using a switching means (48) and is designed for the redundant energy supply to said braking system.

11. Power supply device (8, 8a-i) according to Claim 9 or 10, **characterized in that** a further energy supply unit (22c) is fed from a DC store (30a) without a DC link and is connected to the braking system via a further AC line (46), without coupling to the AC train busbar (24), using a switching means (48) and is designed for the redundant energy supply to said braking system.

12. Power supply device (8, 8f-i) according to one of the preceding claims,
**characterized by** a plurality of AC lines (38, 38a-b) connected to the braking system (26) for supplying operating energy to the braking system (26), to which AC lines the two energy supply units (22a) are connected by means of a parallel circuit, wherein the braking system (26) has a plurality of operating units (58a-d), which each have a plurality of AC feed lines (44, 52) which produce a connection between the operating units (58a-d) and the AC lines (38a-b, 46a-b), wherein the number of AC feed lines corresponds to the number of AC lines.

13. Power supply device (8, 8f-i) according to one of the preceding claims,
**characterized by** a plurality of AC lines (38, 38a-b) connected to the braking system (26) for supplying operating energy to the braking system (26), wherein the braking system (26) has a plurality of operating units (58a-d), which are each provided with redundancy and are split into subsets, and each subset and each operating unit are fed in each case from only one of the AC lines.

## Revendications

1. Dispositif (8, 8a-i) d'alimentation en courant d'un véhicule (2) ferroviaire, qui comprend au moins une voiture (4) entraînée, comprenant
- un circuit (16) intermédiaire,
- un système (26) de frein,
- un système d'alimentation en énergie, le système d'alimentation en énergie comportant au moins deux unités (22a-c) montées sur le circuit (16) intermédiaire d'alimentation en énergie de la voiture (4) entraînée, afin d'alimenter, de manière redondante en énergie, le système (26) de frein,
- deux convertisseurs (12) de courant d'entrée pour la voiture (4) entraînée pour l'alimentation respective de tout le circuit (16) intermédiaire en énergie et
- un moyen (28) de commutation pour connecter les deux convertisseurs (12) de courant d'entrée à au moins l'une des unités (22b, 22c) d'alimentation en énergie pour son alimentation en énergie, le moyen (28) de commutation étant prévu pour séparer le circuit (16) intermédiaire en deux segments (16c, 16d) qui sont séparés l'un de l'autre, qui sont alimentés par respectivement un convertisseur (12) de courant d'entrée et qui ont chacun une unité (22b, 22c) d'alimentation en énergie,
**caractérisé en ce que**
le moyen (28) de commutation est prévu, en outre, pour connecter les deux unités (22b, 22c) d'alimentation en énergie à l'un des deux convertisseurs (12) de courant d'entrée, alors que les segments (16c, 16d) sont sinon séparés, ainsi que pour séparer l'une des unités (22c) d'alimentation en énergie des deux convertisseurs (12) de courant d'entrée.

2. Dispositif (8, 8a-e) d'alimentation en courant suivant la revendication 1,
**caractérisé par** une ligne (24) de train à courant alternatif, pour alimenter le système de frein en énergie de fonctionnement, les deux unités (22a-c) d'alimentation en énergie étant réalisées pour l'alimentation redondante en énergie de la ligne (24) de train à courant alternatif.

3. Dispositif (8, 8b) d'alimentation en courant suivant la revendication 1 ou 2,
**caractérisé en ce que** les deux unités (22a-c) d'alimentation en énergie sont associées chacune à un propre segment (16a-f) du circuit (16) intermédiaire et les deux segments (16a-f) sont séparés l'un de l'autre et servent, par l'intermédiaire des unités (22a-c) d'alimentation en énergie, à l'alimentation redondante en énergie de la ligne (24) de train à courant alternatif.

4. Dispositif (8, 8b-e) d'alimentation en courant suivant la revendication 1,
**caractérisé en ce que** l'unité (22c) d'alimentation en énergie, ayant la puissance la plus petite, est connectée à au moins deux convertisseurs (2) de courant d'entrée et l'unité (22b) d'alimentation en énergie la plus puissante est conçue ou préparée pour, en fonctionnement régulier, alimenter seule en énergie la ligne de train à courant alternatif.

5. Dispositif (8, 8a-e) d'alimentation en courant suivant l'une des revendications précédentes,
**caractérisé par** un accumulateur (30a) de courant continu, qui est connecté à au moins l'une des unités (22c) d'alimentation en énergie et qui est conçu pour alimenter en énergie la ligne (24) de train à courant alternatif par l'intermédiaire de l'unité (22c) d'alimentation en énergie.

6. Dispositif (8, 8a-e) d'alimentation en courant suivant l'une des revendications précédentes,
**caractérisé par** une ligne (32) de train à courant continu, le système d'alimentation en énergie comportant au moins deux unités (34) d'alimentation en énergie pour l'alimentation redondante en énergie de la ligne (32) de train à courant continu.

7. Dispositif (8, 8a-e) d'alimentation en courant suivant la revendication 6,
**caractérisé par** une source de courant continu supplémentaire aux unités (34) d'alimentation en énergie, qui est prévue pour alimenter la ligne (32) de courant à courant continu.

8. Dispositif (8, 8a-e) d'alimentation en courant suivant la revendication 6 ou 7,
**caractérisé en ce que** les unités (34) d'alimentation en énergie alimentant la ligne (32) de train à courant continu ont chacune au moins deux accumulateurs (30b) de courant continu.

9. Dispositif (8, 8a-i) d'alimentation en courant suivant l'une des revendications précédentes,
**caractérisé par** une ligne (24) de train à courant alternatif, à laquelle sont connectées par montage parallèle les deux unités (22a) d'alimentation en énergie, et un certain nombre de lignes (38, 38a-b) à courant alternatif connectées au système (26) de frein pour l'alimentation du système (26) de frein en énergie de freinage, lignes auxquelles les deux unités (22a) d'alimentation en énergie sont connectées par un montage en parallèle, et un moyen (54) de commutation pour connecter le certain nombre de lignes (38, 38a-b) à courant alternatif à la ligne (24) de train à courant alternatif et pour les en séparer.

10. Dispositif (8, 8a-i) d'alimentation en courant suivant la revendication 9,
**caractérisé en ce que** les deux unités (22a) d'alimentation en énergie sont connectées chacune à leur propre convertisseur de courant d'entrée et il y a une autre unité (22d) d'alimentation en énergie, qui est connectée à l'un des convertisseurs (12) de courant d'entrée de l'une des autres unités (22a, 22b) d'alimentation en énergie et, par l'intermédiaire d'une autre ligne (46) à courant alternatif, est connectée, sans couplage de la ligne (24) de rail à courant alternatif, par un moyen (48) de commutation, au système de frein et est conçue pour son alimentation redondante en énergie.

11. Dispositif (8, 8a-i) d'alimentation en courant suivant la revendication 9 ou 10,
**caractérisé en ce qu'**une autre unité (22c) d'alimentation en énergie est alimentée à partir d'un accumulateur (30a) de courant continu sans circuit intermédiaire et est connectée par une autre ligne (46) à courant alternatif, sans couplage de la ligne (24) de train à courant alternatif, par un moyen (48) de commutation, au système de frein et est conçue pour son alimentation redondante en énergie.

12. Dispositif (8, 8f-i) d'alimentation en courant suivant l'une des revendications précédentes,
**caractérisé par** plusieurs lignes (38, 38a-b) à courant alternatif connectées au système (26) de frein pour l'alimentation du système (26) de frein en énergie de fonctionnement, lignes auxquelles les deux unités (22a) d'alimentation en énergie sont connectées par un montage en parallèle, le système (26) de frein ayant plusieurs groupes (58a-d) de fonctionnement, qui disposent chacun de plusieurs lignes (44, 52) d'arrivée de courant alternatif, qui procurent une connexion des groupes (58a-d) de fonctionnement aux lignes (38a-b, 46a-b) à courant alternatif, le nombre des lignes d'arrivée de courant alternatif correspondant au nombre des lignes à courant alternatif.

13. Dispositif (8, 8f-i) d'alimentation en courant suivant l'une des revendications précédentes,
**caractérisé par** plusieurs lignes (38, 38a-b) à courant alternatif connectées au système (26) de frein pour l'alimentation du système (26) de frein en énergie de fonctionnement, le système (26) de frein ayant plusieurs groupes (58a-d) de fonctionnement, qui sont présents chacun de manière redondante et qui sont subdivisés en sous-ensembles, et chaque sous-ensemble et chaque groupe de fonctionnement est alimenté respectivement à partir de, respectivement, seulement l'une des lignes de courant alternatif.
